# EUROPEAN PATENT APPLICATION

(11) **EP 4 736 668 A1**
(43) Date of publication of application: **06.05.2026**
(21) Application number: 24832118.4
(22) Date of filing: 28.06.2024
(51) Int. Cl.: A23L 27/20, A23L 2/00, A23L 2/56, A23L 27/00, A23L 27/12, C12G 3/06

(54) **COMPOSITION, RAW MATERIAL LIQUOR, AND BEVERAGE**

(30) Priority: 30.06.2023 JP 2023108714
(71) Applicant: Suntory Holdings Limited, Osaka-shi, Osaka 530-8203 (JP)
(72) Inventor: TSUCHIYA, Yuko, Soraku-gun, Kyoto 619-0284 (JP); IBUSUKI, Daigo, Soraku-gun, Kyoto 619-0284 (JP); TATSU, Sotaro, Soraku-gun, Kyoto 619-0284 (JP); MURAI, Keiichi, Soraku-gun, Kyoto 619-0284 (JP); NOMACHI, Makoto, Soraku-gun, Kyoto 619-0284 (JP); FUJII, Keizo, Soraku-gun, Kyoto 619-0284 (JP); KOBAYASHI, Taito, Soraku-gun, Kyoto 619-0284 (JP); ISHII, Hitoshi, Soraku-gun, Kyoto 619-0284 (JP); SHIBA, Keisuke, Soraku-gun, Kyoto 619-0284 (JP); IWASA, Keiko, Soraku-gun, Kyoto 619-0284 (JP); AZUMA, Toshiaki, Soraku-gun, Kyoto 619-0284 (JP)
(74) Representative: Vossius & Partner Patentanwälte Rechtsanwälte mbB
(86) International application number: PCT/JP2024/023567
(87) International publication number: WO 2025/005261

(57) **Abstract**

The present invention aims to provide a composition that has a lemony sour aroma, an aroma balance giving an aroma similar to a fresh lemon peel aroma, good aroma release, and low bitterness, and that is suitably used for imparting a lemon peel aroma to beverages, for example. The present invention relates to a composition containing limonene, citral, and β-caryophyllene. The composition has a limonene-to-β-caryophyllene weight ratio (limonene/β-caryophyllene) of 250 to 2500, a citral-to-β-caryophyllene weight ratio (citral/β-caryophyllene) of 5 to 110, a limonene content of 2.5 to 90% by weight, and a bergamottin content of 0.01% by weight or less.

## Description

### TECHNICAL FIELD

The present invention relates to compositions, raw liquors, and beverages, for example.

### BACKGROUND ART

Various techniques are used for imparting a lemon aroma to beverages such as lemon sour. For example, in some cases where lemon sour served in a glass is consumed, lemon juice is squeezed into the glass or a slice of lemon is added to the glass to impart a lemon aroma. However, squeezing lemon juice or preparing a slice of lemon for every serving consumes a lot of time and effort; particularly for packaged beverages such as canned beverages and plastic bottle beverages, these techniques are not practical measures to impart a lemon aroma. From this point of view, compositions are awaited that can more conveniently impart a lemon aroma.

The aroma component of lemon is especially rich in the outermost layer (oil glands) of the skin of lemon; squeezing the skin of lemon provides essential oil (essence) that gives a fresh and vivid peel aroma (fresh lemon peel aroma).

Terpene-free oil, in which terpene hydrocarbons are removed or reduced, has been used as a lemon flavored aroma agent or its material (as disclosed for example in Patent Literature 1).

### CITATION LIST

### - Patent Literature

Patent Literature 1: JP H06-108088 A

### SUMMARY OF INVENTION

### - Technical Problem

Unfortunately, limonene, which is rich in lemon essential oil, is prone to degradation and lemon essential oil contains bitter components such as bergamottin. This means that adding lemon essential oil directly to a beverage may impair the taste of the beverage. Terpene-free oil is an oil with a reduced amount of limonene, which is prone to degradation, so that it has a reduced lemon aroma and does not give a fresh lemon aroma. Thus, no composition has ever been provided that has a lemony sour aroma, an aroma balance giving an aroma similar to a fresh lemon peel aroma, good aroma release, and low bitterness, and that is suitably used for imparting a lemon peel aroma to beverages, for example.

The present invention aims to provide a composition that has a lemony sour aroma, an aroma balance giving an aroma similar to a fresh lemon peel aroma, good aroma release, and low bitterness, and that is suitably used for imparting a lemon peel aroma to beverages, for example.

### - Solution to Problem

The skin of lemon is known to contain limonene, citral, and β-caryophyllene. These are aroma components belonging to the class of terpene hydrocarbons. Among these aroma components, limonene is less beneficial to the lemon peel aroma and is unstable and prone to degradation; thus, in many previous research and development activities to reproduce the lemon peel aroma, reducing the limonene content has been common technical knowledge. Similar to limonene, β-caryophyllene is also less beneficial to the lemon peel aroma, is difficult to fractionate, and is expensive; thus, reducing the β-caryophyllene content has been common technical knowledge. Citral is an important aroma component to reproduce the lemon peel aroma, but causes a strong degradation-derived odor due to p-cresol; thus, reducing the citral content by substituting citral with another aroma component has been common technical knowledge.

The present inventors have performed extensive studies on a composition containing limonene, citral, and β-caryophyllene to find that, contrary to the traditional common technical knowledge, adjusting the limonene content to fall within a specific range, adjusting the limonene-to-β-caryophyllene weight ratio (limonene/β-caryophyllene) and the citral-to-β-caryophyllene weight ratio (citral/β-caryophyllene) to fall within respective specific ranges, and adjusting the bergamottin content to be equal to or smaller than a specific amount can provide a composition that has a lemony sour aroma, an aroma balance giving an aroma similar to a fresh lemon peel aroma, good aroma release, and low bitterness, and that is suitably used for imparting a lemon peel aroma to beverages, for example. Thereby, the present inventors completed the present invention.

The present invention encompasses, for example, the following composition.
(1) A composition containing limonene, citral, and β-caryophyllene, wherein the composition has a limonene-to-β-caryophyllene weight ratio (limonene/β-caryophyllene) of 250 to 2500, a citral-to-β-caryophyllene weight ratio (citral/β-caryophyllene) of 5 to 110, a limonene content of 2.5 to 90% by weight, and a bergamottin content of 0.01% by weight or less.
(2) The composition according to the clause (1), wherein the composition has a β-caryophyllene content of 0.01 to 0.2% by weight.
(3) The composition according to the clause (1) or (2), further containing at least one selected from the group consisting of linalool, citronellal, α-terpineol, geranyl acetate, decanal, nerol, and geraniol.
(4) The composition according to any one of the clauses (1) to (3), wherein the composition is obtainable by use of lemon as one of raw materials or as a single raw material.
(5) The composition according to any one of the clauses (1) to (4), wherein the composition is an aroma agent.
(6) The composition according to any one of the clauses (1) to (5), wherein the composition is to be added to a beverage for use.
(7) A packaged beverage containing the composition according to any one of the clauses (1) to (6) and a beverage.
(8) A raw liquor containing limonene, citral, β-caryophyllene, and ethanol, wherein the raw liquor has a limonene-to-β-caryophyllene weight ratio (limonene/β-caryophyllene) of 250 to 2500, a citral-to-β-caryophyllene weight ratio (citral/β-caryophyllene) of 5 to 110, a limonene content of 0.05 to 2.5% by weight, and an ethanol content of 10% by volume or more.
(9) The raw liquor according to the clause (8), wherein the raw liquor has a bergamottin content of 0.00005% by weight or less.
(10) The raw liquor according to the clause (8) or (9), wherein the raw liquor has a β-caryophyllene content of 0.0001 to 0.01% by weight.
(11) The raw liquor according to any one of the clauses (8) to (10), further containing at least one selected from the group consisting of linalool, citronellal, α-terpineol, geranyl acetate, decanal, nerol, and geraniol.
(12) A method for producing an alcoholic beverage, the method comprising adding the raw liquor according to any one of the clauses (8) to (11).
(13) A beverage containing limonene, citral, and β-caryophyllene, wherein the beverage has a limonene-to-β-caryophyllene weight ratio (limonene/β-caryophyllene) of 250 to 2500, a citral-to-β-caryophyllene weight ratio (citral/β-caryophyllene) of 5 to 110, and a limonene content of 0.01 to 2.5% by weight.
(14) The beverage according to the clause (13), further containing at least one selected from the group consisting of linalool, citronellal, α-terpineol, geranyl acetate, decanal, nerol, and geraniol.
(15) The beverage according to the clause (13) or (14), wherein the beverage is an alcoholic beverage.
(16) The beverage according to the clause (13) or (14), wherein the beverage is a non-alcoholic beverage.
(17) The beverage according to any one of the clauses (13) to (16), wherein the beverage is a packaged beverage.

### - Advantageous Effects of Invention

The present invention can provide a composition that has a lemony sour aroma, an aroma balance giving an aroma similar to a fresh lemon peel aroma, good aroma release, and low bitterness, and that is suitably used for imparting a lemon peel aroma to beverages, for example. The present invention can also provide a raw liquor and a beverage, each giving a lemon peel aroma.

### DESCRIPTION OF EMBODIMENTS

The composition of the present invention contains limonene, citral, and β-caryophyllene, and the composition has a limonene-to-β-caryophyllene weight ratio (limonene/β-caryophyllene) of 250 to 2500, a citral-to-β-caryophyllene weight ratio (citral/β-caryophyllene) of 5 to 110, a limonene content of 2.5 to 90% by weight, and a bergamottin content of 0.01% by weight or less.

Since the composition of the present invention contains limonene, citral, and β-caryophyllene, has a limonene content within a specific range, has a limonene-to-β-caryophyllene weight ratio (limonene/β-caryophyllene) and a citral-to-β-caryophyllene weight ratio (citral/β-caryophyllene) within respective specific ranges, and has a bergamottin content that is equal to or smaller than a specific amount, the composition has a lemony sour aroma, an aroma balance giving an aroma similar to a fresh lemon peel aroma, good aroma release, and low bitterness. In an embodiment, the composition of the present invention can be suitably used for imparting a lemon peel aroma to a beverage, for example.

Herein, the "lemony sour aroma" means a sharp, sour aroma of lemon, which is a constituent of a fresh lemon peel aroma; the "aroma balance" means the balance of aroma including not only the "lemony sour aroma" but also other various aromatic profiles (e.g., brightness, tingling or refreshing sensation, structure and body, and green note of aroma); and the "aroma release" means rapidity of emergence of aromas (not limited to the lemony sour aroma).

Herein, limonene, citral, and β-caryophyllene each may be derived from any origin and may be produced by any method. Herein, each of these components may be one contained in a plant-derived material such as essential oil or its purified product, or may be a synthesized product.

In the case of a plant-derived material or its purified product, the source plant is preferably a citrus. Examples of the citrus include oranges, mandarins, grapefruits, pomelos, kumquat, lemon, lime, bergamot orange, sudachi, and yuzu. The citrus is preferably lemon.

Limonene, citral, and β-caryophyllene each may be a commercially available one.

Limonene is a typical monocyclic monoterpene contained in citruses. Limonene may be d-limonene or may be 1-limonene, or may be a mixture of these, with d-limonene being preferred. The limonene content in the composition of the present invention may be any value from 2.5 to 90% by weight, and is preferably 15% by weight or more, more preferably 25% by weight or more, still more preferably 35% by weight or more, while preferably 88% by weight or less, more preferably 84% by weight or less, still more preferably 80% by weight or less. The limonene content in the composition of the present invention is preferably 15 to 88% by weight, more preferably 25 to 84% by weight, still more preferably 35 to 80% by weight.

Citral is an acyclic monoterpene and is a collective term of geranial and neral, which are cis-trans isomers of each other. The citral content in the composition of the present invention is preferably, but not limited to, 0.005% by weight or more, more preferably 0.05% by weight or more, still more preferably 0.3% by weight or more, particularly preferably 0.6% by weight or more, while preferably 39.6% by weight or less, more preferably 22.2% by weight or less, still more preferably 4.9% by weight or less. The citral content in the composition of the present invention is preferably 0.005 to 39.6% by weight, more preferably 0.05 to 22.2% by weight, still more preferably 0.3 to 4.9% by weight, particularly preferably 0.6 to 4.9% by weight.

β-caryophyllene is a sesquiterpene. The β-caryophyllene content in the composition of the present invention is preferably, but not limited to, 0.001% by weight or more, more preferably 0.01% by weight or more, still more preferably 0.02% by weight or more, particularly preferably 0.03% by weight or more, while preferably 0.36% by weight or less, more preferably 0.33% by weight or less, still more preferably 0.30% by weight or less, further preferably 0.27% by weight or less, particularly preferably 0.2% by weight or less. The β-caryophyllene content in the composition of the present invention is preferably 0.001 to 0.36% by weight, more preferably 0.01 to 0.33% by weight, still more preferably 0.02 to 0.30% by weight, further preferably 0.03 to 0.27% by weight, particularly preferably 0.03 to 0.2% by weight. In an embodiment, the β-caryophyllene content in the composition of the present invention is preferably 0.01 to 0.2% by weight.

The limonene-to-β-caryophyllene weight ratio (limonene/β-caryophyllene) in the composition of the present invention is any value from 250 to 2500, and is preferably 300 or higher, more preferably 350 or higher, while preferably 2000 or lower, more preferably 1600 or lower, still more preferably 1200 or lower. The limonene-to-β-caryophyllene weight ratio (limonene/β-caryophyllene) in the composition of the present invention is preferably 300 to 2000, more preferably 350 to 1600, still more preferably 350 to 1200.

The citral-to-β-caryophyllene weight ratio (citral/β-caryophyllene) in the composition of the present invention is any value from 5 to 110, and is preferably 6 or higher, more preferably 7 or higher, still more preferably 7.5 or higher, while preferably 100 or lower, more preferably 90 or lower, still more preferably 75 or lower. The citral-to-β-caryophyllene weight ratio (citral/β-caryophyllene) in the composition of the present invention is preferably 6 to 100, more preferably 7 to 90, still more preferably 7.5 to 75.

Bergamottin is a coumarin-class non-volatile component contained at high concentration in citruses such as typically grapefruit to cause drug interactions, and gives a lingering strong bitterness. For example, some of essential oils and aroma agents made from citruses, such as grapefruit and lemon, contain bergamottin. The composition of the present invention has a bergamottin content of 0.01 % by weight or less. With a bergamottin content of 0.01% by weight or less, the composition of the present invention has better aroma release. This bergamottin content also reduces lingering strong bitterness caused by bergamottin. The bergamottin content in the composition of the present invention is any value that is equal to or less than 0.01% by weight, and is preferably 0.0075% by weight or less, more preferably 0.005% by weight or less, still more preferably 0.0025% by weight or less. The lower limit of the bergamottin content may be, but is not limited to, 0% by weight. The bergamottin content in the composition of the present invention may be 0 to 0.01% by weight, preferably 0 to 0.0075% by weight, more preferably 0 to 0.005% by weight, still more preferably 0 to 0.0025% by weight.

In the invention described herein, the limonene content, the citral content, and the β-caryophyllene content can be determined by gas chromatography-mass spectrometry, for example. The bergamottin content can be determined by liquid chromatography-mass spectrometry, for example. The determination conditions may be known conditions.

In addition to limonene, citral, and β-caryophyllene, the composition of the present invention may contain an optional component to the extent that the effect of the present invention is not impaired. Examples of the optional component include components that can be used for beverages, such as different volatile aroma components other than limonene, citral, and β-caryophyllene, solvents, emulsifiers, colorants, and antioxidants.

The different volatile aroma components other than limonene, citral, and β-caryophyllene are preferably volatile aroma components contained in lemon, such as linalool, citronellal, α-terpineol, geranyl acetate, decanal, nerol, and geraniol. These components are aroma components contained in citruses such as lemon. Linalool, citronellal, α-terpineol, geraniol, and nerol are monoterpene alcohols. Decanal is an aldehyde and is a compound also called decyl aldehyde. Geranyl acetate is a monoterpene. The composition of the present invention may contain one of these different volatile aroma components alone or may contain two or more of these.

Herein, linalool, citronellal, α-terpineol, geranyl acetate, decanal, nerol, and geraniol each may be derived from any origin and may be produced by any method. Herein, each of these components may be one contained in a plant-derived material such as essential oil or its purified product, or may be a synthesized product.

In the case of a plant-derived material or its purified product, the source plant is preferably a citrus. Examples of the citrus include oranges, mandarins, grapefruits, pomelos, kumquat, lemon, lime, bergamot orange, sudachi, and yuzu. The citrus is preferably lemon. Linalool, citronellal, α-terpineol, geranyl acetate, decanal, nerol, and geraniol each may be a commercially available one.

To improve the "brightness" of an aroma, the composition of the present invention preferably contains linalool. Herein, the "brightness" of an aroma refers to a floral aroma that adds depth to the lemony sour aroma or that enhances the depth of the lemony sour aroma. Enhancing the brightness of an aroma adds complexity or depth to the lemony sour aroma.

In the case where the composition of the present invention contains linalool, the linalool-to-β-caryophyllene weight ratio (linalool/β-caryophyllene) is preferably, but not limited to, 0.20 to 6.00, more preferably 0.20 to 5.00, still more preferably 0.50 to 4.00. A linalool-to-β-caryophyllene weight ratio (linalool/β-caryophyllene) of 0.20 to 6.00 can also give an effect of enhancing the floral aroma that adds depth to the lemony sour aroma or that enhances the depth of the lemony sour aroma.

In the case where the composition of the present invention contains linalool, the linalool content is preferably 0.02 to 0.50% by weight, more preferably 0.02 to 0.40% by weight, still more preferably 0.05 to 0.35% by weight.

To improve the "tingling or refreshing sensation" of an aroma, the composition of the present invention preferably contains citronellal. Herein, the "tingling or refreshing sensation" of an aroma refers to a spicy aroma reminiscent of fresh lemon or raw lemon fruit.

In the case where the composition of the present invention contains citronellal, the citronellal-to-β-caryophyllene weight ratio (citronellal/β-caryophyllene) is preferably, but not limited to, 0.25 to 2.50, more preferably 0.25 to 1.50, still more preferably 0.25 to 1.00. A citronellal-to-β-caryophyllene weight ratio (citronellal/β-caryophyllene) of 0.25 to 2.50 can also give an effect of enhancing the spicy aroma reminiscent of fresh lemon or raw lemon fruit.

In the case where the composition of the present invention contains citronellal, the citronellal content is preferably 0.01 to 0.50% by weight, more preferably 0.01 to 0.30% by weight, still more preferably 0.02 to 0.30% by weight.

To improve the "structure and body" of an aroma, the composition of the present invention preferably contains α-terpineol. Herein, the "structure and body" of an aroma refers to a green aroma that enhances the lemon peel-like aroma and that adds fullness to the aroma. Enhancing the structure and body of the aroma enhances the lemon peel-like aroma and extends the peak width (volume) of the aroma.

In the case where the composition of the present invention contains α-terpineol, the α-terpineol-to-β-caryophyllene weight ratio (α-terpineol/β-caryophyllene) is preferably, but not limited to, 0.50 to 8.00, more preferably 0.50 to 7.50, still more preferably 0.50 to 5.00. An α-terpineol-to-β-caryophyllene weight ratio (α-terpineol/β-caryophyllene) of 0.50 to 8.00 can enhance a green aroma that enhances the lemon peel-like aroma and that adds fullness to the aroma.

In the case where the composition of the present invention contains α-terpineol, the α-terpineol content is preferably 0.02 to 0.25% by weight, more preferably 0.02 to 0.20% by weight, still more preferably 0.05 to 0.20% by weight.

To improve the "brightness/structure and body" of an aroma, the composition of the present invention preferably contains geranyl acetate. Herein, the "brightness/structure and body" of an aroma refers to a floral aroma that improves the fullness and complexity of the lemony sour aroma.

In the case where the composition of the present invention contains geranyl acetate, the geranyl acetate-to-β-caryophyllene weight ratio (geranyl acetate/β-caryophyllene) is preferably, but not limited to, 1.00 to 30.00, more preferably 2.00 to 20.00, still more preferably 3.00 to 15.00. A geranyl acetate-to-β-caryophyllene weight ratio (geranyl acetate/β-caryophyllene) of 1.00 to 30.00 can enhance the floral aroma that improves the fullness and complexity of the lemony sour aroma.

In the case where the composition of the present invention contains geranyl acetate, the geranyl acetate content is preferably 0.05 to 2.50% by weight, more preferably 0.10 to 2.10% by weight, still more preferably 0.50 to 2.10% by weight.

To improve the "potency and fullness" of an aroma, the composition of the present invention preferably contains decanal. Herein, the "potency and fullness" of an aroma refers to a sweet and heavy aroma that adds intensity to the aroma.

In the case where the composition of the present invention contains decanal, the decanal-to-β-caryophyllene weight ratio (decanal/β-caryophyllene) is preferably, but not limited to, 0.10 to 2.00, more preferably 0.10 to 1.50, still more preferably 0.20 to 1.00. A decanal-to-β-caryophyllene weight ratio (decanal/β-caryophyllene) of 0.10 to 2.00 can enhance the sweet and heavy aroma that adds intensity to the aroma.

In the case where the composition of the present invention contains decanal, the decanal content is preferably 0.01 to 0.20% by weight, more preferably 0.01 to 0.15% by weight, still more preferably 0.03 to 0.12% by weight.

To improve the "green note" of an aroma, the composition of the present invention preferably contains nerol. Herein, the "green note" of an aroma refers to an aroma that has cool sensation reminiscent of unripe lemon fruit (green lemon) (refreshing, cool sensation unique to unripe lemon fruit).

In the case where the composition of the present invention contains nerol, the nerol-to-β-caryophyllene weight ratio (nerol/β-caryophyllene) is preferably, but not limited to, 0.10 to 2.50, more preferably 0.10 to 2.00, still more preferably 0.25 to 1.50. A nerol-to-β-caryophyllene weight ratio (nerol/β-caryophyllene) of 0.10 to 2.50 can give an aroma that has cool sensation reminiscent of unripe lemon fruit (green lemon) (refreshing, cool sensation unique to unripe lemon fruit).

In the case where the composition of the present invention contains nerol, the nerol content is preferably 0.02 to 0.20% by weight, more preferably 0.02 to 0.15% by weight, still more preferably 0.05 to 0.15% by weight.

To improve the "structure and body from floral fragrance" of an aroma, the composition of the present invention preferably contains geraniol. Herein, the "structure and body from floral fragrance" of an aroma refers to a floral aroma that adds a mellow and sweet aroma. The floral aroma that adds a mellow and sweet aroma can also be recognized as an aroma of mellow, ripe lemon fruit.

In the case where the composition of the present invention contains geraniol, the geraniol-to-β-caryophyllene weight ratio (geraniol/β-caryophyllene) is preferably, but not limited to, 0.10 to 3.00, more preferably 0.10 to 2.50, still more preferably 0.20 to 2.00. A geraniol-to-β-caryophyllene weight ratio (geraniol/β-caryophyllene) of 0.10 to 3.00 can enhance the floral aroma that adds a mellow and sweet aroma.

In the case where the composition of the present invention contains geraniol, the geraniol content is preferably 0.02 to 0.25% by weight, more preferably 0.02 to 0.20% by weight, still more preferably 0.05 to 0.20% by weight.

To make the aroma balance closer to a fresh lemon peel aroma, the composition of the present invention preferably further contains at least one, more preferably two or more, still more preferably three or more, further preferably four or more, further more preferably five or more, even preferably six or more selected from the group consisting of linalool, citronellal, α-terpineol, geranyl acetate, decanal, nerol, and geraniol, and particularly preferably contains linalool, citronellal, α-terpineol, geranyl acetate, decanal, nerol, and geraniol.

In the invention described herein, the linalool content, citronellal content, α-terpineol content, geranyl acetate content, decanal content, nerol content, and geraniol content can be determined by gas chromatography-mass spectrometry, for example. The determination conditions may be known conditions.

The solvents may be any edible solvents. The composition of the present invention may be such that limonene, citral, and β-caryophyllene, as well as a different volatile aroma component other than these are dissolved, emulsified, or dispersed in a small amount of a solvent. Examples of the solvent include water, ethanol, propylene glycol, MCT oil, triacetin, and glycerol. The composition of the present invention may contain one of these solvents alone or may contain two or more of these. The solvent is preferably ethanol or propylene glycol. In the case of containing a solvent, the composition of the present invention may have any solvent content.

Examples of the emulsifiers include a glycerol fatty acid ester, saponin, a sucrose fatty acid ester, and lecithin. The composition of the present invention may contain one of these emulsifiers alone or may contain two or more of these. In the case of containing an emulsifier, the composition of the present invention may have any emulsifier content.

Lemon essential oil contains non-volatile components such as bergamottin described above. The composition of the present invention has a bergamottin content of 0.01% by weight or less; in addition, preferably, different non-volatile components other than bergamottin are contained in an amount equal to or less than a predetermined amount. Examples of the different non-volatile components include coumarin-class compounds such as citropten and scoparone, limonoids such as limonin, nomilin, and obacunone, carotenoids, and chlorophyll and degradation products thereof. The composition of the present invention may contain one of these different non-volatile components alone or may contain two or more of these.

The composition of the present invention can be produced by any method. For example, the composition of the present invention can be obtained by adding limonene, β-caryophyllene, and citral such that the limonene content, the limonene-to-β-caryophyllene weight ratio (limonene/β-caryophyllene), the citral-to-β-caryophyllene weight ratio (citral/β-caryophyllene), and the bergamottin content in the composition fall within the above respective ranges. In the present invention, at least one selected from the group consisting of limonene, β-caryophyllene, and citral may be added by use of lemon as a raw material. In the case where the composition of the present invention contains at least one compound selected from the group consisting of linalool, citronellal, α-terpineol, geranyl acetate, decanal, nerol, and geraniol, the compound may be added by use of lemon as a raw material.

The composition of the present invention is preferably in the liquid form (a liquid composition) at 25°C, more preferably in the liquid form (a liquid composition) at 10°C.

The composition of the present invention is preferably obtainable by use of lemon as one of raw materials or as a single raw material. For example, at least one of limonene, citral, or β-caryophyllene is preferably derived from lemon, more preferably extracted or purified from lemon or essential oil thereof. In the case where the composition of the present invention contains bergamottin, this bergamottin may be derived from lemon. In the case where the composition of the present invention contains at least one compound selected from the group consisting of linalool, citronellal, α-terpineol, geranyl acetate, decanal, nerol, and geraniol, the compound is preferably derived from lemon, more preferably extracted or purified from lemon or essential oil thereof.

The composition of the present invention may be an aroma agent (aroma agent composition), for example. The composition of the present invention is preferably an aroma agent, more preferably an aroma agent to be added to beverages, still more preferably an aroma agent for imparting a lemon peel aroma to beverages. The composition of the present invention can also be referred to as a lemon peel aroma imparting agent.

The composition of the present invention is preferably added to beverages for use. The composition of the present invention may be added to a beverage containing no lemon juice, or the composition of the present invention may be added to a beverage containing lemon juice (e.g., lemon chuhai) immediately before consumption. Adding the composition of the present invention can impart a fresh lemon peel aroma to a beverage. In the case of adding the composition of the present invention to a beverage containing lemon juice, the fresh and vivid peel aroma (fresh lemon peel aroma) at the moment of squeezing lemon skin imparted by the composition of the present invention differs from the fresh lemon aroma imparted by lemon juice.

Examples of the beverage include, but are not limited to, an alcoholic beverage and a non-alcoholic beverage.

Herein, the alcoholic beverage refers to a beverage having an ethanol content of 1.0% by volume or more. Examples of the alcoholic beverage include beer, low-malt beer, other beer-taste beverages, wine, chuhai, sour, liqueur, cocktail, shochu, whiskey, and Japanese sake.

Herein, the non-alcoholic beverage refers to a beverage having an ethanol content less than 1.0% by volume. Examples of the non-alcoholic beverage include tea beverages (e.g., green tea, black tea, pu'er tea, and oolong tea), coffee, coffee-based beverages, carbonated beverages (e.g., carbonated water, fruit juice-containing carbonated beverages, fruit juice-free carbonated beverages, dairy carbonated beverages, and energy drinks), non-alcoholic beer-taste beverages, and non-alcoholic chuhai.

Preferred among these are black tea (lemon tea), chuhai (lemon chuhai), non-alcoholic chuhai (non-alcoholic lemon chuhai), sour (e.g., lemon sour), and beer (e.g., Radler), for example.

In this list, the names of beverages to which a lemon peel aroma is to be imparted are first mentioned, followed by the respective names of beverages, in parentheses, obtained by imparting a lemon peel aroma.

The composition of the present invention may be added to a beverage by any method, such as a method of adding the composition of the present invention directly to a beverage or a method of adding a sugar cube impregnated with the composition of the present invention to a beverage.

Examples of the method of adding the composition of the present invention directly to a beverage include a method of dropping the composition of the present invention directly to a beverage and a method of spraying the composition of the present invention, i.e., applying the mist of the composition of the present invention to a beverage. These methods of adding the composition of the present invention directly to a beverage seem to include those in which the composition of the present invention is separated from a beverage to form oil droplets and those in which the composition of the present invention is dissolved, emulsified, or dispersed in a beverage. In either case, the composition of the present invention can impart a lemon peel aroma to a beverage, and the composition of the present invention can provide a lemon peel aroma before and during consumption.

In the method of adding a sugar cube impregnated with the composition of the present invention to a beverage, the sugar cube is soluble in water and thus allows the composition of the present invention to be mixed and dissolved into a beverage, providing a lemon peel aroma before and during consumption. In addition, the sugar cube can give sweetness to the beverage.

The lemon peel aroma derived from the composition of the present invention is preferably imparted immediately before (roughly 15 minutes or shorter before) consumption of a beverage. In the case of an acidic beverage, adding the composition of the present invention to the beverage may promote degradation of the aroma component. Thus, it is preferable to add the composition of the present invention to the beverage immediately before consumption of the beverage to impart the lemon peel aroma.

The amount of the composition of the present invention added to a beverage may be, but is not limited to, 0.004 to 0.1 g per 100 mL of the beverage.

A packaged beverage containing the composition of the present invention and a beverage is also an aspect of the present invention. Examples of the packaged beverage include, but are not limited to, canned beverages, plastic bottle beverages, and glass bottle beverages. The packaged beverage of the present invention may be one prepared by mixing the composition of the present invention and a beverage in advance and then packing the mixture into a container, and is preferably a packaged beverage including the composition of the present invention and a beverage separated from the composition. For example, the packaged beverage is preferably provided as a kit of a container filled with a beverage and an attachment such as a portion, spray container, or pouch filled with the composition of the present invention, which enables addition of the composition of the present invention to a beverage immediately before consumption of the beverage. In this case, the container filled with the beverage and the attachment, such as a portion, spray container, or pouch, filled with the composition of the present invention may be integrated with each other. For example, the packaged beverage may be a canned beverage having a mechanism such that opening the can with a tab induces breaking of the pouch filled with the composition of the present invention, whereby the composition of the present invention is added to the beverage.

The raw liquor of the present invention contains limonene, citral, β-caryophyllene, and ethanol, wherein the raw liquor has
a limonene-to-β-caryophyllene weight ratio (limonene/β-caryophyllene) of 250 to 2500,
a citral-to-β-caryophyllene weight ratio (citral/β-caryophyllene) of 5 to 110,
a limonene content of 0.05 to 2.5% by weight, and
an ethanol content of 10% by volume or more.

The raw liquor of the present invention is to be combined (diluted) with a different beverage such as water for production of an alcoholic beverage.

Since the raw liquor of the present invention contains limonene, citral, β-caryophyllene, and ethanol, and has a limonene content within a specific range as well as a limonene-to-β-caryophyllene weight ratio (limonene/β-caryophyllene) and a citral-to-β-caryophyllene weight ratio (citral/β-caryophyllene) within respective specific ranges, the raw liquor has a lemony sour aroma, an aroma balance giving an aroma similar to a fresh lemon peel aroma, and good aroma release.

The limonene content in the raw liquor of the present invention may be any value from 0.05 to 2.5% by weight, and is preferably 0.075% by weight or more, more preferably 0.1% by weight or more, still more preferably 0.2% by weight or more, while preferably 2.4% by weight or less, more preferably 2.3% by weight or less, still more preferably 2.0% by weight or less, particularly preferably 1.5% by weight or less. The limonene content in the raw liquor of the present invention is preferably 0.075 to 2.4% by weight, more preferably 0.075 to 2.3% by weight, still more preferably 0.1 to 2.0% by weight, particularly preferably 0.2 to 1.5% by weight.

The citral content in the raw liquor of the present invention is preferably, but not limited to, 0.0001% by weight or more, more preferably 0.001% by weight or more, still more preferably 0.005% by weight or more, while preferably 1.1% by weight or less, more preferably 0.2% by weight or less, still more preferably 0.1% by weight or less. The citral content in the raw liquor of the present invention is preferably 0.0001 to 1.1% by weight, more preferably 0.001 to 0.2% by weight, still more preferably 0.005 to 0.1% by weight.

The β-caryophyllene content in the raw liquor of the present invention is preferably, but not limited to, 0.00002% by weight or more, more preferably 0.0001% by weight or more, still more preferably 0.0005% by weight or more, particularly preferably 0.001% by weight or more, while preferably 0.01% by weight or less, more preferably 0.008% by weight or less, still more preferably 0.0075% by weight or less. The β-caryophyllene content in the raw liquor of the present invention is preferably 0.00002 to 0.01% by weight, more preferably 0.0001 to 0.01% by weight, still more preferably 0.0005 to 0.008% by weight, particularly preferably 0.001 to 0.0075% by weight.

The limonene-to-β-caryophyllene weight ratio (limonene/β-caryophyllene) in the raw liquor of the present invention is any value from 250 to 2500, and is preferably 300 or higher, more preferably 350 or higher, while preferably 2000 or lower, more preferably 1600 or lower, still more preferably 1200 or lower. The limonene-to-β-caryophyllene weight ratio (limonene/β-caryophyllene) in the raw liquor of the present invention is preferably 300 to 2000, more preferably 350 to 1600, still more preferably 350 to 1200.

The citral-to-β-caryophyllene weight ratio (citral/β-caryophyllene) in the raw liquor of the present invention is any value from 5 to 110, and is preferably 6 or higher, more preferably 7 or higher, still more preferably 7.5 or higher, while preferably 100 or lower, more preferably 90 or lower, still more preferably 75 or lower. The citral-to-β-caryophyllene weight ratio (citral/β-caryophyllene) in the raw liquor of the present invention is preferably 6 to 100, more preferably 7 to 90, still more preferably 7.5 to 75.

The raw liquor of the present invention has an ethanol content of 10% by volume or more. The ethanol content can be determined using an oscillating densitometer, for example. The ethanol content in the raw liquor of the present invention is any value that is equal to or more than 10% by volume, and is preferably 12% by volume or more, more preferably 14% by weight or more. The upper limit of the ethanol content may be, but is not limited to, 80% by volume or 60% by volume. The ethanol content in the raw liquor of the present invention is preferably 12 to 80% by volume, more preferably 14 to 60% by volume.

In addition to limonene, citral, β-caryophyllene, and ethanol, the raw liquor of the present invention may contain an optional component to the extent that the effect of the present invention is not impaired. Examples of the optional component include components that can be used for beverages, such as different volatile aroma components other than limonene, citral, and β-caryophyllene, solvents other than ethanol, emulsifiers, colorants, and antioxidants.

Examples of the different volatile aroma components other than limonene, citral, and β-caryophyllene include linalool, citronellal, α-terpineol, geranyl acetate, decanal, nerol, and geraniol. The raw liquor of the present invention may contain one of these different volatile aroma components alone or may contain two or more of these. In the raw liquor of the present invention, preferred embodiments of the above different volatile aroma components, preferred ranges of the weight ratios thereof to β-caryophyllene (different volatile aroma component/β-caryophyllene), and other preferred features are the same as those of the above composition of the present invention.

To make the aroma balance closer to a fresh lemon peel aroma, the raw liquor of the present invention preferably further contains at least one, more preferably two or more, still more preferably three or more, further preferably four or more, further more preferably five or more, even preferably six or more selected from the group consisting of linalool, citronellal, α-terpineol, geranyl acetate, decanal, nerol, and geraniol, and particularly preferably contains linalool, citronellal, α-terpineol, geranyl acetate, decanal, nerol, and geraniol.

In the case where the raw liquor of the present invention contains linalool, the linalool content is preferably 0.00001 to 0.1% by weight, more preferably 0.00001 to 0.067% by weight, still more preferably 0.0001 to 0.0067% by weight.

In the case where the raw liquor of the present invention contains citronellal, the citronellal content is preferably 0.00001 to 0.1% by weight, more preferably 0.00001 to 0.067% by weight, still more preferably 0.0001 to 0.0067% by weight.

In the case where the raw liquor of the present invention contains α-terpineol, the α-terpineol content is preferably 0.00001 to 0.1% by weight, more preferably 0.00001 to 0.067% by weight, still more preferably 0.0001 to 0.0067% by weight.

In the case where the raw liquor of the present invention contains geranyl acetate, the geranyl acetate content is preferably 0.0001 to 1.0% by weight, more preferably 0.0001 to 0.067% by weight, still more preferably 0.001 to 0.067% by weight.

In the case where the raw liquor of the present invention contains decanal, the decanal content is preferably 0.000005 to 0.1% by weight, more preferably 0.000005 to 0.033% by weight, still more preferably 0.00005 to 0.033% by weight.

In the case where the raw liquor of the present invention contains nerol, the nerol content is preferably 0.00001 to 0.1% by weight, more preferably 0.00001 to 0.067% by weight, still more preferably 0.0001 to 0.0067% by weight.

In the case where the raw liquor of the present invention contains geraniol, the geraniol content is preferably 0.00001 to 0.1% by weight, more preferably 0.00001 to 0.067% by weight, still more preferably 0.0001 to 0.0067% by weight.

The solvents other than ethanol may be any edible solvents. The raw liquor of the present invention may be such that limonene, citral, and β-caryophyllene, as well as a different volatile aroma component other than these are dissolved, emulsified, or dispersed in a solvent other than ethanol. Examples of the solvent other than ethanol include water, propylene glycol, MCT oil, triacetin, and glycerol. Preferred among the solvents other than ethanol is propylene glycol or water, with water being more preferred. The raw liquor of the present invention may contain one of these solvents other than ethanol alone or may contain two or more of these. In the case of containing a solvent other than ethanol, the raw liquor of the present invention may have any solvent content.

Examples of the emulsifiers include a glycerol fatty acid ester, saponin, a sucrose fatty acid ester, and lecithin. The raw liquor of the present invention may contain one of these emulsifiers alone or may contain two or more of these. In the case of containing an emulsifier, the raw liquor of the present invention may have any emulsifier content.

The raw liquor of the present invention preferably contains a non-volatile component in an amount equal to or less than a predetermined amount. Examples of the non-volatile component include coumarin-class compounds such as bergamottin, citropten, and scoparone, limonoids such as limonin, nomilin, and obacunone, carotenoids, chlorophyll and degradation products thereof, hydrocarbons, sweeteners, acidifiers, pH regulators, antioxidants, and polyphenols. The raw liquor of the present invention may contain one of these non-volatile components alone or may contain two or more of these.

The bergamottin content in the raw liquor of the present invention is preferably, but not limited to, 0.00005% by weight or less, more preferably 0.000025% by weight or less, still more preferably 0.00001% by weight or less. The lower limit of the bergamottin content may be, but is not limited to, 0% by weight. The bergamottin content in the raw liquor of the present invention is preferably 0 to 0.00005% by weight, more preferably 0 to 0.000025% by weight, still more preferably 0 to 0.00001% by weight.

The raw liquor of the present invention can be produced by any method; for example, the raw liquor of the present invention can be obtained by a method of diluting the composition of the present invention described above with a solvent containing ethanol such that the limonene content is 0.05 to 2.5% by weight and the ethanol content is 10% by volume or more.

A method for producing an alcoholic beverage including adding the raw liquor of the present invention is also an aspect of the present invention. In the method for producing an alcoholic beverage of the present invention, adding the raw liquor of the present invention to a different beverage (e.g., diluting the raw liquor of the present invention with a different beverage) can provide an alcoholic beverage that gives a lemon peel aroma. The raw liquor of the present invention may be added to a different beverage by any method, such as a conventionally known method.

Examples of the different beverage include water, tonic water, white wine, spumante (sparkling wine), milk, gin, and vodka. Water may be carbonated water. One of these different beverages may be used alone, or two or more of these may be used in combination.

In the method for producing an alcoholic beverage of the present invention, the raw liquor of the present invention may be diluted with a different beverage at any weight ratio (a different beverage/the raw liquor of the present invention).

The beverage of the present invention contains limonene, citral, and β-caryophyllene, wherein the beverage has
a limonene-to-β-caryophyllene weight ratio (limonene/β-caryophyllene) of 250 to 2500,
a citral-to-β-caryophyllene weight ratio (citral/β-caryophyllene) of 5 to 110, and
a limonene content of 0.01 to 2.5% by weight.

Since the beverage of the present invention contains limonene, citral, and β-caryophyllene, has a limonene content within a specific range, and has a limonene-to-β-caryophyllene weight ratio (limonene/β-caryophyllene) and a citral-to-β-caryophyllene weight ratio (citral/β-caryophyllene) within respective specific ranges, the beverage has a lemony sour aroma, an aroma balance giving an aroma similar to a fresh lemon peel aroma, and good aroma release.

The limonene content in the beverage of the present invention is any value that is 0.01 to 2.5% by weight, and is preferably 1.5% by weight or less, more preferably 1.0% by weight or less, still more preferably 0.5% by weight or less, particularly preferably 0.25% by weight or less. The limonene content in the beverage of the present invention is preferably 0.01 to 1.5% by weight, more preferably 0.01 to 1.0% by weight, still more preferably 0.01 to 0.5% by weight, particularly preferably 0.01 to 0.25% by weight.

The citral content in the beverage of the present invention is preferably, but not limited to, 0.00002% by weight or more, more preferably 0.0002% by weight or more, still more preferably 0.001% by weight or more, while preferably 1.1% by weight or less, more preferably 0.2% by weight or less, still more preferably 0.1% by weight or less. The citral content in the beverage of the present invention is preferably 0.00002 to 1.1% by weight, more preferably 0.0002 to 0.2% by weight, still more preferably 0.001 to 0.1% by weight.

The β-caryophyllene content in the beverage of the present invention is preferably, but not limited to, 0.000004% by weight or more, more preferably 0.00002% by weight or more, still more preferably 0.0001% by weight or more, particularly preferably 0.0002% by weight or more, while preferably 0.01% by weight or less, more preferably 0.008% by weight or less, still more preferably 0.0075% by weight or less. The β-caryophyllene content in the beverage of the present invention is preferably 0.000004 to 0.01% by weight, more preferably 0.00002 to 0.008% by weight, still more preferably 0.0001 to 0.0075% by weight, particularly preferably 0.0002 to 0.0075% by weight.

The limonene-to-β-caryophyllene weight ratio (limonene/β-caryophyllene) in the beverage of the present invention is any value from 250 to 2500, and is preferably 300 or higher, more preferably 350 or higher, while preferably 2000 or lower, more preferably 1600 or lower, still more preferably 1200 or lower. The limonene-to-β-caryophyllene weight ratio (limonene/β-caryophyllene) in the beverage of the present invention is preferably 300 to 2000, more preferably 350 to 1600, still more preferably 350 to 1200.

The citral-to-β-caryophyllene weight ratio (citral/β-caryophyllene) in the beverage of the present invention is any value from 5 to 110, and is preferably 6 or higher, more preferably 7 or higher, still more preferably 7.5 or higher, while preferably 100 or lower, more preferably 90 or lower, still more preferably 75 or lower. The citral-to-β-caryophyllene weight ratio (citral/β-caryophyllene) in the beverage of the present invention is preferably 6 to 100, more preferably 7 to 90, still more preferably 7.5 to 75.

The beverage of the present invention may or may not contain bergamottin. The bergamottin content in the beverage of the present invention is preferably 0.0008% by weight or less, more preferably 0.0001% by weight or less, still more preferably 0.00005% by weight or less. The lower limit of the bergamottin content may be, but is not limited to, 0% by weight. The bergamottin content in the beverage of the present invention is preferably 0 to 0.0008% by weight, more preferably 0 to 0.0001% by weight, still more preferably 0 to 0.00005% by weight.

In addition to limonene, citral, and β-caryophyllene, the beverage of the present invention may contain an optional component to the extent that the effect of the present invention is not impaired. Examples of the optional component include components that can be used for beverages, such as different volatile aroma components other than limonene, citral, and β-caryophyllene, solvents, emulsifiers, carotenoids, chlorophyll and degradation products thereof, hydrocarbons, proteins, amino acids, sweeteners, acidifiers, pH regulators, antioxidants, polyphenols, and gaseous carbon dioxide.

Examples of the different volatile aroma components other than limonene, citral, and β-caryophyllene include linalool, citronellal, α-terpineol, geranyl acetate, decanal, nerol, and geraniol. The beverage of the present invention may contain one of these different volatile aroma components alone or may contain two or more of these. In the beverage of the present invention, preferred embodiments of the above different volatile aroma components, preferred ranges of the weight ratios thereof to β-caryophyllene (different volatile aroma component/β-caryophyllene), and other factors are the same as those of the above composition of the present invention.

To make the aroma balance closer to a fresh lemon peel aroma, the beverage of the present invention preferably further contains at least one, more preferably two or more, still more preferably three or more, further preferably four or more, further more preferably five or more, even preferably six or more selected from the group consisting of linalool, citronellal, α-terpineol, geranyl acetate, decanal, nerol, and geraniol, and particularly preferably contains linalool, citronellal, α-terpineol, geranyl acetate, decanal, nerol, and geraniol.

In the case where the beverage of the present invention contains linalool, the linalool content is preferably 0.000002 to 0.10% by weight, more preferably 0.00002 to 0.05% by weight, still more preferably 0.00002 to 0.01% by weight.

In the case where the beverage of the present invention contains citronellal, the citronellal content is preferably 0.000001 to 0.04% by weight, more preferably 0.00001 to 0.02% by weight, still more preferably 0.00001 to 0.01% by weight.

In the case where the beverage of the present invention contains α-terpineol, the α-terpineol content is preferably 0.000002 to 0.12% by weight, more preferably 0.00002 to 0.05% by weight, still more preferably 0.00002 to 0.03% by weight.

In the case where the beverage of the present invention contains geranyl acetate, the geranyl acetate content is preferably 0.000005 to 0.50% by weight, more preferably 0.00005 to 0.20% by weight, still more preferably 0.00005 to 0.10% by weight.

In the case where the beverage of the present invention contains decanal, the decanal content is preferably 0.000001 to 0.03% by weight, more preferably 0.00001 to 0.02% by weight, still more preferably 0.00001 to 0.01% by weight.

In the case where the beverage of the present invention contains nerol, the nerol content is preferably 0.000002 to 0.06% by weight, more preferably 0.00002 to 0.03% by weight, still more preferably 0.00002 to 0.01% by weight.

In the case where the beverage of the present invention contains geraniol, the geraniol content is preferably 0.000002 to 0.06% by weight, more preferably 0.00002 to 0.03% by weight, still more preferably 0.00002 to 0.01% by weight.

The solvents may be any edible solvents. The beverage of the present invention may be such that limonene, citral, and β-caryophyllene, as well as a different volatile aroma component other than these are dissolved, emulsified, or dispersed in a solvent. Examples of the solvent include water, ethanol, propylene glycol, MCT oil, triacetin, and glycerol. The solvent is preferably water or ethanol. The beverage of the present invention may contain one of these solvents alone or may contain two or more of these. In the case of containing a solvent, the beverage of the present invention may have any solvent content.

Examples of the emulsifiers include a glycerol fatty acid ester, saponin, a sucrose fatty acid ester, and lecithin. The beverage of the present invention may contain one of these emulsifiers alone or may contain two or more of these. In the case of containing an emulsifier, the beverage of the present invention may have any emulsifier content.

The beverage of the present invention can be produced by any method; for example, the beverage of the present invention can be obtained by a method of diluting the composition or raw liquor of the present invention described above with a solvent such that the limonene content is 0.01 to 2.5% by weight.

The beverage of the present invention may be an alcoholic beverage or may be a non-alcoholic beverage, and is preferably an alcoholic beverage. Herein, the alcoholic beverage refers to a beverage having an ethanol content of 1.0% by volume or more. The non-alcoholic beverage refers to a beverage having an ethanol content less than 1.0% by volume.

Examples of the beverage of the present invention include lemon tea, lemon chuhai, non-alcoholic lemon chuhai, lemon sour, and Radler.

In the case where the beverage of the present invention is an alcoholic beverage, the ethanol content is any value that is equal to or more than 1.0% by volume, and is preferably 2.5% by volume or more, while preferably less than 10.0% by volume, more preferably 9.0% by volume or less, still more preferably 7.5% by volume or less. In the case where the beverage of the present invention is an alcoholic beverage, the ethanol content is preferably not less than 1.0% by volume but less than 10.0% by volume, more preferably 1.0 to 9.0% by volume, still more preferably 2.5 to 7.5% by volume.

The beverage of the present invention is preferably a packaged beverage. Examples of the packaged beverage include, but are not limited to, canned beverages, plastic bottle beverages, and glass bottle beverages.

The numerical range defined by the lower limit and the upper limit herein, i.e., "the lower limit to the upper limit", includes the lower limit and the upper limit. For example, the range defined by "1 to 2" means 1 or more and 2 or less, with 1 and 2 being included. Herein, the range may be any combination of any upper limit and any lower limit.

### EXAMPLES

The present invention is described in more detail below with reference to examples. The present invention is not limited to these examples.

### (Examples 1 to 8 and Comparative Examples 1 to 5)

### <Regents used>

The following regents were used in Examples 1 to 8 and Comparative Examples 1 to 5.
Limonene, citral, and β-caryophyllene (each available from Sigma-Aldrich Co.)
Limonene used in the examples is (R)-(+)-limonene (d-limonene).

The above regents were mixed with ethanol such that the limonene content, citral content, and β-caryophyllene content were the respective values (% by weight) shown in the following Tables 1 to 3, whereby the compositions were obtained. The limonene-to-β-caryophyllene weight ratios (limonene/β-caryophyllene) and the citral-to-β-caryophyllene weight ratios (citral/β-caryophyllene) in the respective compositions are shown in Tables 1 to 3.

### <Sensory evaluation>

The sensory evaluation was performed by three trained sensory panelists for three items: "lemony sour aroma", "aroma release", and "overall balance".

Sensory evaluation glasses were each charged with 20 mL of a 5 vol% aqueous ethanol solution. Onto this aqueous ethanol solution was added 25 µL of one of the compositions obtained in Examples 1 to 8 and Comparative Examples 1 to 5. Each of the three aroma evaluation items, i.e., "lemony sour aroma", "aroma release", and "overall balance" was then evaluated.

The three items, "lemony sour aroma", "aroma release", and "overall balance", were evaluated based on the following criteria using a rating scale with 1-point increments (5 levels), where the reference points were set such that the composition of Example 2 was evaluated as score 5 while the 5 vol% aqueous ethanol solution was evaluated as score 1.

The "lemony sour aroma" means a sharp sour aroma of lemon, which is a constituent of a fresh lemon peel aroma; the "aroma release" means rapidity of emergence of aromas (not limited to the lemony sour aroma); and the "overall balance" means the aroma balance of a fresh lemon peel aroma, including the above "lemony sour aroma" and "aroma release". For the "aroma release", a more rapid aroma release was evaluated as better aroma release.

### Evaluation criteria for "lemony sour aroma"

5: The "lemony sour aroma" is perceived as very strong (equivalent to the composition of Example 2).
4: The "lemony sour aroma" is perceived as strong.
3: The "lemony sour aroma" is perceived.
2: The "lemony sour aroma" is perceived slightly.
1: The "lemony sour aroma" is not perceived (equivalent to the 5 vol% aqueous ethanol solution).

### Evaluation criteria for "aroma release"

5: The "aroma release" is very good (equivalent to the composition of Example 2).
4: The "aroma release" is good.
3: The "aroma release" is slightly good.
2: The "aroma release" is poor.
1: The "aroma release" is very poor (equivalent to the 5 vol% aqueous ethanol solution).

### Evaluation criteria for "overall balance"

5: The "overall balance" is very good (equivalent to the composition of Example 2).
4: The "overall balance" is good.
3: The "overall balance" is slightly good.
2: The "overall balance" is poor.
1: The "overall balance" is very poor (equivalent to the 5 vol% aqueous ethanol solution).

For each evaluation item, a higher score indicates higher evaluation. The evaluation was based on the average of the scores of the three sensory panelists.

The evaluation results (averages of the scores of the three sensory panelists) are shown in Tables 1 to 3.

**[Table 1]**

| | | | Comparative Example 1 | Example 1 | Example 2 | Example 3 |
|---|---|---|---|---|---|---|
| Composition | Limonene | (Wt%) | 10.0 | 25.0 | 50.0 | 80.0 |
| | Citral | | 1.0 | 1.0 | 1.0 | 1.0 |
| | β-Caryophyllene | | 0.1 | 0.1 | 0.1 | 0.1 |
| | Bergamottin | | 0.000 | 0.000 | 0.000 | 0.000 |
| | Limonene/β-caryophyllene | (Weight ratio) | 100.0 | 250.0 | 500.0 | 800.0 |
| | Citral/β-caryophyllene | | 10.0 | 10.0 | 10.0 | 10.0 |
| Evaluation results | Lemony sour aroma | | 1.0 | 2.3 | 5.0 | 4.0 |
| | Aroma release | | 2.0 | 3.0 | 5.0 | 4.0 |
| | Overall balance | | 1.0 | 3.0 | 5.0 | 4.0 |

**[Table 2]**

| | | | Comparative Example 2 | Example 4 | Example 2 | Example 5 | Example 6 | Comparative Example 3 |
|---|---|---|---|---|---|---|---|---|
| Composition | Limonene | (Wt%) | 50.0 | 50.0 | 50.0 | 50.0 | 50.0 | 50.0 |
| | Citral | | 0.25 | 0.5 | 1.0 | 5.0 | 11.0 | 25.0 |
| | β-Caryophyllene | | 0.1 | 0.1 | 0.1 | 0.1 | 0.1 | 0.1 |
| | Bergamottin | | 0.000 | 0.000 | 0.000 | 0.000 | 0.000 | 0.000 |
| | Limonene/β-caryophyllene | (Weight ratio) | 500.0 | 500.0 | 500.0 | 500.0 | 500.0 | 500.0 |
| | Citral/β-caryophyllene | | 2.5 | 5.0 | 10.0 | 50.0 | 110.0 | 250.0 |
| Evaluation results | Lemony sour aroma | | 1.7 | 3.3 | 5.0 | 4.7 | 3.0 | 2.0 |
| | Aroma release | | 3.0 | 3.3 | 5.0 | 4.0 | 2.7 | 2.0 |
| | Overall balance | | 1.7 | 3.0 | 5.0 | 4.0 | 3.0 | 1.3 |

**[Table 3]**

| | | | Comparative Example 4 | Example 7 | Example 2 | Example 8 | Comparative Example 5 |
|---|---|---|---|---|---|---|---|
| Composition | Limonene | (Wt%) | 50.0 | 50.0 | 50.0 | 50.0 | 50.0 |
| | Citral | | 1.0 | 1.0 | 1.0 | 1.0 | 1.0 |
| | β-Caryophyllene | | 0.01 | 0.02 | 0.1 | 0.2 | 0.5 |
| | Bergamottin | | 0.000 | 0.000 | 0.000 | 0.000 | 0.000 |
| | Limonene/β-caryophyllene | (Weight ratio) | 5000.0 | 2500.0 | 500.0 | 250.0 | 100.0 |
| | Citral/β-caryophyllene | | 100.0 | 50.0 | 10.0 | 5.0 | 2.0 |
| Evaluation results | Lemony sour aroma | | 1.0 | 3.0 | 5.0 | 3.7 | 2.0 |
| | Aroma release | | 2.7 | 4.0 | 5.0 | 2.7 | 1.3 |
| | Overall balance | | 1.7 | 3.0 | 5.0 | 3.3 | 2.3 |

### (Examples 9 and 10 and Comparative Example 6)

### <Regents used>

In Examples 9 and 10 and Comparative Example 6, limonene, citral, and β-caryophyllene used were the same regents as in the above examples, e.g., Example 1.

Bergamottin used was a high purity product extracted and purified from lemon.

The above regents were mixed with ethanol such that the limonene content, citral content, β-caryophyllene content, and bergamottin content were the respective values (% by weight) shown in the following Table 4, whereby the compositions were obtained. The limonene-to-β-caryophyllene weight ratios (limonene/β-caryophyllene) and the citral-to-β-caryophyllene weight ratios (citral/β-caryophyllene) in the respective compositions were shown in Table 4.

### <Sensory evaluation>

The sensory evaluation was performed by four trained sensory panelists for "aroma release" and "bitterness".

Sensory evaluation glasses were each charged with 20 mL of a 5 vol% aqueous ethanol solution. Onto this aqueous ethanol solution was added 25 µL of one of the compositions obtained in Examples 2, 9, and 10 and Comparative Example 6. The "aroma release" was evaluated based on the same criteria as those for the evaluation in Example 1.

Then, each sensory panelist took about 10 mL of the composition in the mouth from the sensory evaluation glass and evaluated the "bitterness". The "bitterness" was evaluated based on the following criteria using a rating scale with 1-point increments (5 levels), where the reference points were set such that the composition of Example 2 was evaluated as score 5.

### Evaluation criteria for "bitterness"

5: The bitterness is not perceived.
4: The bitterness is perceived slightly.
3: The bitterness is perceived.
2: The bitterness is perceived as slightly strong.
1: The bitterness is perceived as strong.

For each evaluation item, a higher score indicates higher evaluation. The evaluation was based on the average of the scores of the four sensory panelists.

The evaluation results (averages of the scores of the four sensory panelists) are shown in Table 4.

**[Table 4]**

| | | | Example 2 | Example 9 | Example 10 | Comparative Example 6 |
|---|---|---|---|---|---|---|
| Composition | Limonene | (Wt%) | 50.0 | 50.0 | 50.0 | 50.0 |
| | Citral | | 1.0 | 1.0 | 1.0 | 1.0 |
| | β-Caryophyllene | | 0.1 | 0.1 | 0.1 | 0.1 |
| | Bergamottin | | 0.000 | 0.005 | 0.010 | 0.020 |
| | Limonene/β-caryophyllene | (Weight ratio) | 500.0 | 500.0 | 500.0 | 500.0 |
| | Citral/β-caryophyllene | | 10.0 | 10.0 | 10.0 | 10.0 |
| Evaluation results | Bitterness | | 5.0 | 4.0 | 3.0 | 1.5 |
| | Aroma release | | 5.0 | 4.0 | 3.0 | 1.5 |

### (Examples 11 to 17 and Comparative Examples 7 to 10)

### <Regents used>

In Examples 11 to 17 and Comparative Examples 7 to 10, citral and β-caryophyllene used were the same regents as in the above examples, e.g., Example 1.

Limonene used was a lemon-derived, limonene-rich commercially available aroma agent (limonene-rich aroma agent obtained as distillate during production of lemon terpene-free oil, limonene content: 47.6% by weight). This commercially available aroma agent contains none of citral, β-caryophyllene, linalool, citronellal, α-terpineol, geranyl acetate, decanal, nerol, geraniol, and bergamottin.

The above regents were mixed with ethanol such that the limonene content, citral content, and β-caryophyllene content were the respective values (% by weight) shown in the following Tables 5 to 7, whereby the compositions were obtained. The limonene-to-β-caryophyllene weight ratios (limonene/β-caryophyllene) and the citral-to-β-caryophyllene weight ratios (citral/β-caryophyllene) in the respective compositions were shown in Tables 5 to 7.

### <Sensory evaluation>

The sensory evaluation was performed by four trained sensory panelists for three items: "lemony sour aroma", "aroma release", and "overall balance".

Sensory evaluation glasses were each charged with 20 mL of a 5 vol% aqueous ethanol solution. Onto this aqueous ethanol solution was added 25 µL of one of the compositions obtained in Examples 11 to 17 and Comparative Examples 7 to 10. Each of the three aroma evaluation items, i.e., "lemony sour aroma", "aroma release", and "overall balance" was then evaluated based on the same criteria as those for the evaluation in Example 1.

For each evaluation item, a higher score indicates higher evaluation. The evaluation was based on the average of the scores of the four sensory panelists.

The evaluation results (averages of the scores of the four sensory panelists) are shown in Tables 5 to 7.

**[Table 5]**

| | | | Comparative Example 7 | Example 11 | Example 12 |
|---|---|---|---|---|---|
| Composition | Limonene | (Wt%) | 10.0 | 25.0 | 35.0 |
| | Citral | | 1.000 | 1.000 | 1.000 |
| | β-Caryophyllene | | 0.100 | 0.100 | 0.100 |
| | Bergamottin | | 0.000 | 0.000 | 0.000 |
| | Limonene/β-caryophyllene | (Weight ratio) | 100.0 | 250.0 | 350.0 |
| | Citral/β-caryophyllene | | 10.0 | 10.0 | 10.0 |
| Evaluation results | Lemony sour aroma | | 2.3 | 3.3 | 4.3 |
| | Aroma release | | 2.0 | 2.8 | 4.0 |
| | Overall balance | | 2.0 | 3.0 | 4.3 |

**[Table 6]**

| | | | Comparative Example 8 | Example 13 | Example 12 | Example 14 | Example 15 |
|---|---|---|---|---|---|---|---|
| Composition | Limonene | (Wt%) | 35.0 | 35.0 | 35.0 | 35.0 | 35.0 |
| | Citral | | 0.250 | 0.500 | 1.000 | 5.000 | 9.000 |
| | β-Caryophyllene | | 0.100 | 0.100 | 0.100 | 0.100 | 0.100 |
| | Bergamottin | | 0.000 | 0.000 | 0.000 | 0.000 | 0.000 |
| | Limonene/β-caryophyllene | (Weight ratio) | 350.0 | 350.0 | 350.0 | 350.0 | 350.0 |
| | Citral/β-caryophyllene | | 2.5 | 5.0 | 10.0 | 50.0 | 90.0 |
| Evaluation results | Lemony sour aroma | | 2.0 | 3.5 | 4.3 | 3.3 | 3.0 |
| | Aroma release | | 2.8 | 3.3 | 4.0 | 3.3 | 3.0 |
| | Overall balance | | 2.0 | 3.3 | 4.3 | 3.3 | 3.0 |

**[Table 7]**

| | | | Comparative Example 9 | Example 16 | Example 12 | Example 17 | Comparative Example 10 |
|---|---|---|---|---|---|---|---|
| Composition | Limonene | (Wt%) | 35.0 | 35.0 | 35.0 | 35.0 | 35.0 |
| | Citral | | 1.000 | 1.000 | 1.000 | 1.000 | 1.000 |
| | β-Caryophyllene | | 0.007 | 0.014 | 0.100 | 0.140 | 0.350 |
| | Bergamottin | | 0.000 | 0.000 | 0.000 | 0.000 | 0.000 |
| | Limonene/β-caryophyllene | (Weight ratio) | 5000.0 | 2500.0 | 350.0 | 250.0 | 100.0 |
| | Citral/β-caryophyllene | | 142.9 | 71.4 | 10.0 | 7.1 | 2.9 |
| Evaluation results | Lemony sour aroma | | 2.5 | 3.5 | 4.3 | 3.8 | 2.5 |
| | Aroma release | | 2.0 | 3.3 | 4.0 | 3.8 | 2.5 |
| | Overall balance | | 2.5 | 3.8 | 4.3 | 3.8 | 2.3 |

### (Examples 18 to 21 and Comparative Example 11)

The composition obtained in Example 12 was diluted with a diluent at dilution factors (weight-based dilution factors) shown in the following Table 8, whereby raw liquors were prepared. The diluent was prepared using neutral spirit 95 (ethanol content: 95% by volume) and water such that the ethanol content in each raw liquor was the value (vol%) shown in Table 8. In Example 21, bergamottin used was the same regent as in the examples, e.g., Example 9; this regent was added such that the bergamottin content was the value (wt%) shown in Table 8. Thereby, the raw liquors of Examples 18 to 21 and Comparative Example 11 were obtained.

### <Sensory evaluation>

The sensory evaluation was performed by four trained sensory panelists for three items: "lemony sour aroma", "aroma release", and "overall balance".

Sensory evaluation glasses were each charged with 25 mL of one of the raw liquors of Examples 18 to 21 and Comparative Example 11. Each of the three aroma evaluation items, i.e., "lemony sour aroma", "aroma release", and "overall balance" was then evaluated based on the same criteria as those for the evaluation in Example 1.

Then, the sensory evaluation was performed by four trained sensory panelists for "bitterness" of the raw liquor obtained in Example 21. Each sensory panelist took a portion (about 10 mL) of the raw liquor in the mouth and evaluated the "bitterness" based on the same criteria as those for the evaluation in Example 9.

For each evaluation item, a higher score indicates higher evaluation. The evaluation was based on the average of the scores of the four sensory panelists.

The evaluation results (averages of the scores of the four sensory panelists) of "lemony sour aroma", "aroma release", and "overall balance" are shown in Table 8. The evaluation result (average of the scores of the four sensory panelists) of the "bitterness" of the raw liquor obtained in Example 21 was 3.5.

**[Table 8**

| | | | Comparative Example 11 | Example 18 | Example 19 | Example 20 | Example 21 |
|---|---|---|---|---|---|---|---|
| Dilution factor | | | 7000 | 700 | 100 | 15 | 100 |
| Raw liquor | Limonene | (Wt%) | 0.005 | 0.05 | 0.35 | 2.33 | 0.35 |
| | Citral | | 0.0001 | 0.0014 | 0.0100 | 0.0667 | 0.0100 |
| | β-Caryophyllene | | 0.00001 | 0.0001 | 0.0010 | 0.0067 | 0.0010 |
| | Bergamottin | | 0.000 | 0.000 | 0.000 | 0.000 | 0.00005 |
| | Limonene/β-caryophyllene | (Weight ratio) | 350.0 | 350.0 | 350.0 | 350.0 | 350.0 |
| | Citral/β-caryophyllene | | 10.0 | 10.0 | 10.0 | 10.0 | 10.0 |
| | Ethanol | (Vol%) | 14.25 | 14.25 | 14.25 | 14.25 | 14.25 |
| Evaluation results | Lemony sour aroma | | 2.8 | 3.0 | 3.3 | 3.3 | 2.5 |
| | Aroma release | | 2.3 | 2.8 | 4.0 | 3.0 | 2.5 |
| | Overall balance | | 2.0 | 3.0 | 3.8 | 3.0 | 3.0 |

### (Examples 22 to 45 and Comparative Examples 12 to 19)

### <Regents used>

In Examples 22 to 45 and Comparative Examples 12 to 19, limonene, citral, β-caryophyllene, and bergamottin used were the same regents as in the above examples, e.g., Example 9. Linalool, citronellal, α-terpineol, geranyl acetate, decanal, nerol, and geraniol used were the following regents.

Linalool, citronellal, α-terpineol, geranyl acetate, decanal, nerol, and geraniol (each available from Sigma-Aldrich Co.)

The above regents were mixed with ethanol such that the limonene content, citral content, β-caryophyllene content, bergamottin content, linalool content, citronellal content, α-terpineol content, geranyl acetate content, decanal content, nerol content, and geraniol content were the respective values (% by weight) shown in the following Tables 9 to 16, whereby the compositions were obtained. The limonene-to-β-caryophyllene weight ratios (limonene/β-caryophyllene), the citral-to-β-caryophyllene weight ratios (citral/β-caryophyllene), the linalool-to-β-caryophyllene weight ratios (linalool/β-caryophyllene), the citronellal-to-β-caryophyllene weight ratios (citronellal/β-caryophyllene), the α-terpineol-to-β-caryophyllene weight ratios (α-terpineol/β-caryophyllene), the geranyl acetate-to-β-caryophyllene weight ratios (geranyl acetate/β-caryophyllene), the decanal-to-β-caryophyllene weight ratios (decanal/β-caryophyllene), the nerol-to-β-caryophyllene weight ratios (nerol/β-caryophyllene), and the geraniol-to-β-caryophyllene weight ratios (geraniol/β-caryophyllene) in the respective compositions were shown in Tables 9 to 16.

### <Sensory evaluation>

The sensory evaluation was performed by four trained sensory panelists for "aroma release" and "bitterness".

Sensory evaluation glasses were each charged with 20 mL of a 5 vol% aqueous ethanol solution. Onto this aqueous ethanol solution was added 25 µL of one of the compositions obtained in Examples 22 to 45 and Comparative Examples 12 to 19. The "aroma release" was then evaluated. For the "aroma release", a more rapid aroma release was evaluated as better aroma release. Then, each sensory panelist took about 10 mL of the composition in the mouth from the sensory evaluation glass and evaluated the "bitterness".

The "aroma release" was evaluated based on the following criteria using a rating scale with 0.5-point increments (9 levels).

In Table 9 (Examples 22 to 24 and Comparative Example 12), the reference points were set such that the composition of Example 22 was evaluated as score 5 while the 5 vol% aqueous ethanol solution was evaluated as score 1.

In Table 10 (Examples 25 to 27 and Comparative Example 13), the reference points were set such that the composition of Example 25 was evaluated as score 5 while the 5 vol% aqueous ethanol solution was evaluated as score 1.

In Table 11 (Examples 28 to 30 and Comparative Example 14), the reference points were set such that the composition of Example 28 was evaluated as score 5 while the 5 vol% aqueous ethanol solution was evaluated as score 1.

In Table 12 (Examples 31 to 33 and Comparative Example 15), the reference points were set such that the composition of Example 31 was evaluated as score 5 while the 5 vol% aqueous ethanol solution was evaluated as score 1.

In Table 13 (Examples 34 to 36 and Comparative Example 16), the reference points were set such that the composition of Example 34 was evaluated as score 5 while the 5 vol% aqueous ethanol solution was evaluated as score 1.

In Table 14 (Examples 37 to 39 and Comparative Example 17), the reference points were set such that the composition of Example 37 was evaluated as score 5 while the 5 vol% aqueous ethanol solution was evaluated as score 1.

In Table 15 (Examples 40 to 42 and Comparative Example 18), the reference points were set such that the composition of Example 40 was evaluated as score 5 while the 5 vol% aqueous ethanol solution was evaluated as score 1.

In Table 16 (Examples 43 to 45 and Comparative Example 19), the reference points were set such that the composition of Example 43 was evaluated as score 5 while the 5 vol% aqueous ethanol solution was evaluated as score 1.

### Evaluation criteria for "aroma release"

5: The "aroma release" is very good (equivalent to the compositions of Examples 22, 25, 28, 31, 34, 37, 40, and 43 in the respective Tables 9 to 16).
4: The "aroma release" is good.
3: The "aroma release" is slightly good.
2: The "aroma release" is poor.
1: The "aroma release" is very poor (equivalent to the 5 vol% aqueous ethanol solution in Tables 9 to 16).

For each of the examples and the comparative examples shown in Tables 9 to 16, the "bitterness" was evaluated based on the following criteria using a rating scale with 0.5-point increments (9 levels), where the reference points were set such that the composition of Example 22 was evaluated as score 5.

### Evaluation criteria for "bitterness"

5: The bitterness is not perceived.
4: The bitterness is perceived slightly.
3: The bitterness is perceived.
2: The bitterness is perceived as slightly strong.
1: The bitterness is perceived as strong.

For each evaluation item, a higher score indicates higher evaluation. The evaluation was based on the average of the scores of the four sensory panelists.

The evaluation results (averages of the scores of the four sensory panelists) are shown in Tables 9 to 16.

**[Table 9]**

| | | | Example 22 | Example 23 | Example 24 | Comparative Example 12 |
|---|---|---|---|---|---|---|
| Composition | Limonene | (Wt%) | 50.0 | 50.0 | 50.0 | 50.0 |
| | Citral | | 1.0 | 1.0 | 1.0 | 1.0 |
| | β-Caryophyllene | | 0.1 | 0.1 | 0.1 | 0.1 |
| | Bergamottin | | 0.000 | 0.005 | 0.010 | 0.020 |
| | Linalool | | 0.10 | 0.10 | 0.10 | 0.10 |
| | Limonene/β-caryophyllene | (Weight ratio) | 500.0 | 500.0 | 500.0 | 500.0 |
| | Citral/β-caryophyllene | | 10.0 | 10.0 | 10.0 | 10.0 |
| | Linalool/β-caryophyllene | | 1.00 | 1.00 | 1.00 | 1.00 |
| Evaluation results | Bitterness | | 5.0 | 4.1 | 3.0 | 1.8 |
| | Aroma release | | 5.0 | 4.5 | 3.4 | 2.1 |

**[Table 10]**

| | | | Example 25 | Example 26 | Example 27 | Comparative Example 13 |
|---|---|---|---|---|---|---|
| Composition | Limonene | (Wt%) | 50.0 | 50.0 | 50.0 | 50.0 |
| | Citral | | 1.0 | 1.0 | 1.0 | 1.0 |
| | β-Caryophyllene | | 0.1 | 0.1 | 0.1 | 0.1 |
| | Bergamottin | | 0.000 | 0.005 | 0.010 | 0.020 |
| | Citronellal | | 0.10 | 0.10 | 0.10 | 0.10 |
| | Limonene/β-caryophyllene | (Weight ratio) | 500.0 | 500.0 | 500.0 | 500.0 |
| | Citral/β-caryophyllene | | 10.0 | 10.0 | 10.0 | 10.0 |
| | Citronellal/β-caryophyllene | | 1.00 | 1.00 | 1.00 | 1.00 |
| Evaluation results | Bitterness | | 5.0 | 4.1 | 3.1 | 2.3 |
| | Aroma release | | 5.0 | 4.4 | 3.4 | 2.1 |

**[Table 11]**

| | | | Example 28 | Example 29 | Example 30 | Comparative Example 14 |
|---|---|---|---|---|---|---|
| Composition | Limonene | (Wt%) | 50.0 | 50.0 | 50.0 | 50.0 |
| | Citral | | 1.0 | 1.0 | 1.0 | 1.0 |
| | β-Caryophyllene | | 0.1 | 0.1 | 0.1 | 0.1 |
| | Bergamottin | | 0.000 | 0.005 | 0.010 | 0.020 |
| | α-Terpineol | | 0.15 | 0.15 | 0.15 | 0.15 |
| | Limonene/β-caryophyllene | (Weight ratio) | 500.0 | 500.0 | 500.0 | 500.0 |
| | Citral/β-caryophyllene | | 10.0 | 10.0 | 10.0 | 10.0 |
| | α-Terpineol/β-caryophyllene | | 1.50 | 1.50 | 1.50 | 1.50 |
| Evaluation results | Bitterness | | 5.0 | 4.0 | 3.0 | 1.6 |
| | Aroma release | | 5.0 | 4.1 | 3.1 | 1.9 |

**[Table 12]**

| | | | Example 31 | Example 32 | Example 33 | Comparative Example 15 |
|---|---|---|---|---|---|---|
| Composition | Limonene | (Wt%) | 50.0 | 50.0 | 50.0 | 50.0 |
| | Citral | | 1.0 | 1.0 | 1.0 | 1.0 |
| | β-Caryophyllene | | 0.1 | 0.1 | 0.1 | 0.1 |
| | Bergamottin | | 0.000 | 0.005 | 0.010 | 0.020 |
| | Geranyl acetate | | 1.00 | 1.00 | 1.00 | 1.00 |
| | Limonene/β-caryophyllene | (Weight ratio) | 500.0 | 500.0 | 500.0 | 500.0 |
| | Citral/β-caryophyllene | | 10.0 | 10.0 | 10.0 | 10.0 |
| | Geranyl acetate/β-caryophyllene | | 10.00 | 10.00 | 10.00 | 10.00 |
| Evaluation results | Bitterness | | 5.0 | 4.0 | 3.0 | 1.9 |
| | Aroma release | | 5.0 | 4.0 | 3.3 | 2.0 |

**[Table 13]**

| | | | Example 34 | Example 35 | Example 36 | Comparative Example 16 |
|---|---|---|---|---|---|---|
| Composition | Limonene | (Wt%) | 50.0 | 50.0 | 50.0 | 50.0 |
| | Citral | | 1.0 | 1.0 | 1.0 | 1.0 |
| | β-Caryophyllene | | 0.1 | 0.1 | 0.1 | 0.1 |
| | Bergamottin | | 0.000 | 0.005 | 0.010 | 0.020 |
| | Decanal | | 0.05 | 0.05 | 0.05 | 0.05 |
| | Limonene/β-caryophyllene | (Weight ratio) | 500.0 | 500.0 | 500.0 | 500.0 |
| | Citral/β-caryophyllene | | 10.0 | 10.0 | 10.0 | 10.0 |
| | Decanal/β-caryophyllene | | 0.50 | 0.50 | 0.50 | 0.50 |
| Evaluation results | Bitterness | | 5.0 | 4.0 | 3.0 | 2.0 |
| | Aroma release | | 5.0 | 4.1 | 3.1 | 2.1 |

**[Table 14]**

| | | | Example 37 | Example 38 | Example 39 | Comparative Example 17 |
|---|---|---|---|---|---|---|
| Composition | Limonene | (Wt%) | 50.0 | 50.0 | 50.0 | 50.0 |
| | Citral | | 1.0 | 1.0 | 1.0 | 1.0 |
| | β-Caryophyllene | | 0.1 | 0.1 | 0.1 | 0.1 |
| | Bergamottin | | 0.000 | 0.005 | 0.010 | 0.020 |
| | Nerol | | 0.10 | 0.10 | 0.10 | 0.10 |
| | Limonene/β-caryophyllene | (Weight ratio) | 500.0 | 500.0 | 500.0 | 500.0 |
| | Citral/β-caryophyllene | | 10.0 | 10.0 | 10.0 | 10.0 |
| | Nerol/β-caryophyllene | | 1.00 | 1.00 | 1.00 | 1.00 |
| Evaluation results | Bitterness | | 5.0 | 4.3 | 3.4 | 2.1 |
| | Aroma release | | 5.0 | 4.3 | 3.4 | 2.4 |

**[Table 15]**

| | | | Example 40 | Example 41 | Example 42 | Comparative Example 18 |
|---|---|---|---|---|---|---|
| Composition | Limonene | (Wt%) | 50.0 | 50.0 | 50.0 | 50.0 |
| | Citral | | 1.0 | 1.0 | 1.0 | 1.0 |
| | β-Caryophyllene | | 0.1 | 0.1 | 0.1 | 0.1 |
| | Bergamottin | | 0.000 | 0.005 | 0.010 | 0.020 |
| | Geraniol | | 0.10 | 0.10 | 0.10 | 0.10 |
| | Limonene/β-caryophyllene | (Weight ratio) | 500.0 | 500.0 | 500.0 | 500.0 |
| | Citral/β-caryophyllene | | 10.0 | 10.0 | 10.0 | 10.0 |
| | Geraniol/β-caryophyllene | | 1.00 | 1.00 | 1.00 | 1.00 |
| Evaluation results | Bitterness | | 5.0 | 4.1 | 3.0 | 1.9 |
| | Aroma release | | 5.0 | 4.0 | 3.0 | 2.0 |

**[Table 16]**

| | | | Example 43 | Example 44 | Example 45 | Comparative Example 19 |
|---|---|---|---|---|---|---|
| Composition | Limonene | (Wt%) | 50.0 | 50.0 | 50.0 | 50.0 |
| | Citral | | 1.0 | 1.0 | 1.0 | 1.0 |
| | β-Caryophyllene | | 0.1 | 0.1 | 0.1 | 0.1 |
| | Bergamottin | | 0.000 | 0.005 | 0.010 | 0.020 |
| | Linalool | | 0.10 | 0.10 | 0.10 | 0.10 |
| | Citronellal | | 0.10 | 0.10 | 0.10 | 0.10 |
| | α-Terpineol | | 0.15 | 0.15 | 0.15 | 0.15 |
| | Geranyl acetate | | 1.00 | 1.00 | 1.00 | 1.00 |
| | Decanal | | 0.05 | 0.05 | 0.05 | 0.05 |
| | Nerol | | 0.10 | 0.10 | 0.10 | 0.10 |
| | Geraniol | | 0.10 | 0.10 | 0.10 | 0.10 |
| | Limonene/β-caryophyllene | (Weight ratio) | 500.0 | 500.0 | 500.0 | 500.0 |
| | Citral/β-caryophyllene | | 10.0 | 10.0 | 10.0 | 10.0 |
| | Linalool/β-caryophyllene | | 1.00 | 1.00 | 1.00 | 1.00 |
| | Citronellal/β-caryophyllene | | 1.00 | 1.00 | 1.00 | 1.00 |
| | α-Terpheol/β-caryophyllene | | 1.50 | 1.50 | 1.50 | 1.50 |
| | Geranyl acetate/β-caryophyllene | | 10.00 | 10.00 | 10.00 | 10.00 |
| | Decanal/β-caryophyllene | | 0.50 | 0.50 | 0.50 | 0.50 |
| | Nerol/β-caryophyllene | | 1.00 | 1.00 | 1.00 | 1.00 |
| | Geraniol/β-caryophyllene | | 1.00 | 1.00 | 1.00 | 1.00 |
| Evaluation results | Bitterness | | 5.0 | 4.5 | 3.5 | 2.1 |
| | Aroma release | | 5.0 | 4.0 | 3.0 | 2.0 |

### (Examples 46 to 52 and Comparative Examples 20 to 22)

### <Regents used>

In Examples 46 to 52 and Comparative Examples 20 to 22, limonene, citral, β-caryophyllene, linalool, citronellal, α-terpineol, geranyl acetate, decanal, nerol, and geraniol used were the same regents as in the above examples, e.g., Example 43.

The above regents were mixed with ethanol such that the limonene content, citral content, β-caryophyllene content, linalool content, citronellal content, α-terpineol content, geranyl acetate content, decanal content, nerol content, and geraniol content were the respective values (% by weight) shown in the following Tables 17 to 19, whereby the compositions were obtained. The limonene-to-β-caryophyllene weight ratios (limonene/β-caryophyllene), the citral-to-β-caryophyllene weight ratios (citral/β-caryophyllene), the linalool-to-β-caryophyllene weight ratios (linalool/β-caryophyllene), the citronellal-to-β-caryophyllene weight ratios (citronellal/β-caryophyllene), the α-terpineol-to-β-caryophyllene weight ratios (α-terpineol/β-caryophyllene), the geranyl acetate-to-β-caryophyllene weight ratios (geranyl acetate/β-caryophyllene), the decanal-to-β-caryophyllene weight ratios (decanal/β-caryophyllene), the nerol-to-β-caryophyllene weight ratios (nerol/β-caryophyllene), and the geraniol-to-β-caryophyllene weight ratios (geraniol/β-caryophyllene) in the respective compositions were shown in Tables 17 to 19.

### <Sensory evaluation>

The sensory evaluation was performed by four trained sensory panelists for total 10 items: "lemony sour aroma", "aroma release", and "overall balance", as well as "brightness", "tingling or refreshing sensation", "structure and body", "brightness/structure and body", "potency and fullness", "green note", and "structure and body from floral fragrance" of the aroma.

Sensory evaluation glasses were each charged with 20 mL of a 5 vol% aqueous ethanol solution. Onto this aqueous ethanol solution was added 25 µL of one of the compositions obtained in Examples 46 to 52 and Comparative Examples 20 to 22. Each of the aforementioned total 10 evaluation items was then evaluated.

Each evaluation item was evaluated based on the following criteria using a rating scale with 0.1-point increments, where the reference points were set such that the composition of Example 43 was evaluated as score 10, the composition of Example 2 was evaluated as score 5, and the 5 vol% aqueous ethanol solution was evaluated as score 1. For the "aroma release", a more rapid aroma release was evaluated as better aroma release. For the scores 6 to 10 in the evaluation criteria for "lemony sour aroma" as well as "brightness", "tingling or refreshing sensation", "structure and body", "brightness/structure and body", "potency and fullness", "green note", and "structure and body from floral fragrance" of the aroma below, the term "enhanced" means that the aroma of the evaluation target, such as "lemony sour aroma", is enhanced in comparison with the composition of Example 2 (the score of the aroma is higher than the evaluation (score 5) of the composition of Example 2). For the scores 6 to 10 in the evaluation criteria for "overall balance" and "aroma release" below, the term "improved" means that the "overall balance" or the "aroma release" is improved in comparison with the composition of Example 2 (the score is higher than the evaluation (score 5) of the composition of Example 2).

### Evaluation criteria for "lemony sour aroma"

10: The "lemony sour aroma" is highly significantly enhanced (equivalent to the composition of Example 43).
9: The "lemony sour aroma" is significantly enhanced.
8: The "lemony sour aroma" is enhanced.
7: The "lemony sour aroma" is slightly enhanced.
6: The "lemony sour aroma" is very slightly enhanced.
5: The "lemony sour aroma" is perceived as very strong (equivalent to the composition of Example 2).
4: The "lemony sour aroma" is perceived as strong.
3: The "lemony sour aroma" is perceived.
2: The "lemony sour aroma" is perceived slightly.
1: The "lemony sour aroma" is not perceived (equivalent to the 5 vol% aqueous ethanol solution).

### Evaluation criteria for "aroma release"

10: The "aroma release" is highly significantly improved (equivalent to the composition of Example 43).
9: The "aroma release" is significantly improved.
8: The "aroma release" is improved.
7: The "aroma release" is slightly improved.
6: The "aroma release" is very slightly improved.
5: The "aroma release" is very good (equivalent to the composition of Example 2).
4: The "aroma release" is good.
3: The "aroma release" is slightly good.
2: The "aroma release" is poor.
1: The "aroma release" is very poor (equivalent to the 5 vol% aqueous ethanol solution).

### Evaluation criteria for "overall balance"

10: The "overall balance" is highly significantly improved (equivalent to the composition of Example 43).
9: The "overall balance" is significantly improved.
8: The "overall balance" is improved.
7: The "overall balance" is slightly improved.
6: The "overall balance" is very slightly improved.
5: The "overall balance" is very good (equivalent to the composition of Example 2).
4: The "overall balance" is good.
3: The "overall balance" is slightly good.
2: The "overall balance" is poor.
1: The "overall balance" is very poor (equivalent to the 5 vol% aqueous ethanol solution).

### Evaluation criteria for "brightness" of aroma

10: The "brightness" of the aroma is highly significantly enhanced (equivalent to the composition of Example 43).
9: The "brightness" of the aroma is significantly enhanced.
8: The "brightness" of the aroma is enhanced.
7: The "brightness" of the aroma is slightly enhanced.
6: The "brightness" of the aroma is very slightly enhanced.
5: The "brightness" of the aroma is perceived as very strong (equivalent to the composition of Example 2).
4: The "brightness" of the aroma is perceived as strong.
3: The "brightness" of the aroma is perceived.
2: The "brightness" of the aroma is perceived slightly.
1: The "brightness" of the aroma is not perceived (equivalent to the 5 vol% aqueous ethanol solution).

### Evaluation criteria for "tingling or refreshing sensation" of aroma

10: The "tingling or refreshing sensation" of the aroma is highly significantly enhanced (equivalent to the composition of Example 43).
9: The "tingling or refreshing sensation" of the aroma is significantly enhanced.
8: The "tingling or refreshing sensation" of the aroma is enhanced.
7: The "tingling or refreshing sensation" of the aroma is slightly enhanced.
6: The "tingling or refreshing sensation" of the aroma is very slightly enhanced.
5: The "tingling or refreshing sensation" of the aroma is perceived as very strong (equivalent to the composition of Example 2).
4: The "tingling or refreshing sensation" of the aroma is perceived as strong.
3: The "tingling or refreshing sensation" of the aroma is perceived.
2: The "tingling or refreshing sensation" of the aroma is perceived slightly.
1: The "tingling or refreshing sensation" of the aroma is not perceived (equivalent to the 5 vol% aqueous ethanol solution).

### Evaluation criteria for "structure and body" of aroma

10: The "structure and body" of the aroma is highly significantly enhanced (equivalent to the composition of Example 43).
9: The "structure and body" of the aroma is significantly enhanced.
8: The "structure and body" of the aroma is enhanced.
7: The "structure and body" of the aroma is slightly enhanced.
6: The "structure and body" of the aroma is very slightly enhanced.
5: The "structure and body" of the aroma is perceived as very strong (equivalent to the composition of Example 2).
4: The "structure and body" of the aroma is perceived as strong.
3: The "structure and body" of the aroma is perceived.
2: The "structure and body" of the aroma is perceived slightly.
1: The "structure and body" of the aroma is not perceived (equivalent to the 5 vol% aqueous ethanol solution).

### Evaluation criteria for "brightness/structure and body" of aroma

10: The "brightness/structure and body" of the aroma is highly significantly enhanced (equivalent to the composition of Example 43).
9: The "brightness/structure and body" of the aroma is significantly enhanced.
8: The "brightness/structure and body" of the aroma is enhanced.
7: The "brightness/structure and body" of the aroma is slightly enhanced.
6: The "brightness/structure and body" of the aroma is very slightly enhanced.
5: The "brightness/structure and body" of the aroma is perceived as very strong (equivalent to the composition of Example 2).
4: The "brightness/structure and body" of the aroma is perceived as strong.
3: The "brightness/structure and body" of the aroma is perceived.
2: The "brightness/structure and body" of the aroma is perceived slightly.
1: The "brightness/structure and body" of the aroma is not perceived (equivalent to the 5 vol% aqueous ethanol solution).

### Evaluation criteria for "potency and fullness" of aroma

10: The "potency and fullness" of the aroma is highly significantly enhanced (equivalent to the composition of Example 43).
9: The "potency and fullness" of the aroma is significantly enhanced.
8: The "potency and fullness" of the aroma is enhanced.
7: The "potency and fullness" of the aroma is slightly enhanced.
6: The "potency and fullness" of the aroma is very slightly enhanced.
5: The "potency and fullness" of the aroma is perceived as very strong (equivalent to the composition of Example 2).
4: The "potency and fullness" of the aroma is perceived as strong.
3: The "potency and fullness" of the aroma is perceived.
2: The "potency and fullness" of the aroma is perceived slightly.
1: The "potency and fullness" of the aroma is not perceived (equivalent to the 5 vol% aqueous ethanol solution).

### Evaluation criteria for "green note" of aroma

10: The "green note" of the aroma is highly significantly enhanced (equivalent to the composition of Example 43).
9: The "green note" of the aroma is significantly enhanced.
8: The "green note" of the aroma is enhanced.
7: The "green note" of the aroma is slightly enhanced.
6: The "green note" of the aroma is very slightly enhanced.
5: The "green note" of the aroma is perceived as very strong (equivalent to the composition of Example 2).
4: The "green note" of the aroma is perceived as strong.
3: The "green note" of the aroma is perceived.
2: The "green note" of the aroma is perceived slightly.
1: The "green note" of the aroma is not perceived (equivalent to the 5 vol% aqueous ethanol solution).

### Evaluation criteria for "structure and body from floral fragrance" of aroma

10: The "structure and body from floral fragrance" of the aroma is highly significantly enhanced (equivalent to the composition of Example 43).
9: The "structure and body from floral fragrance" of the aroma is significantly enhanced.
8: The "structure and body from floral fragrance" of the aroma is enhanced.
7: The "structure and body from floral fragrance" of the aroma is slightly enhanced.
6: The "structure and body from floral fragrance" of the aroma is very slightly enhanced.
5: The "structure and body from floral fragrance" of the aroma is perceived as very strong (equivalent to the composition of Example 2).
4: The "structure and body from floral fragrance" of the aroma is perceived as strong.
3: The "structure and body from floral fragrance" of the aroma is perceived.
2: The "structure and body from floral fragrance" of the aroma is perceived slightly.
1: The "structure and body from floral fragrance" of the aroma is not perceived (equivalent to the 5 vol% aqueous ethanol solution).

For each evaluation item, a higher score indicates higher evaluation. The evaluation was based on the average of the scores of the four sensory panelists.

The evaluation results (averages of the scores of the four sensory panelists) are shown in Tables 17 to 19. Tables 17 to 19 also include the composition obtained in Example 43, and Table 17 also includes the composition obtained in Example 2.

**[Table 17]**

| | | | Example 2 | Comparative Example 20 | Example 46 | Example 43 | Example 47 |
|---|---|---|---|---|---|---|---|
| Composition | Limonene | (Wt%) | 50.0 | 10.0 | 25.0 | 50.0 | 80.0 |
| | Citral | | 1.0 | 1.0 | 1.0 | 1.0 | 1.0 |
| | β-Caryophyllene | | 0.1 | 0.1 | 0.1 | 0.1 | 0.1 |
| | Bergamottin | | 0.000 | 0.000 | 0.000 | 0.000 | 0.000 |
| | Linalool | | 0.000 | 0.10 | 0.10 | 0.10 | 0.10 |
| | Citronellal | | 0.000 | 0.10 | 0.10 | 0.10 | 0.10 |
| | α-Terpineol | | 0.000 | 0.15 | 0.15 | 0.15 | 0.15 |
| | Geranyl acetate | | 0.000 | 1.00 | 1.00 | 1.00 | 1.00 |
| | Decanal | | 0.000 | 0.05 | 0.05 | 0.05 | 0.05 |
| | Nerol | | 0.000 | 0.10 | 0.10 | 0.10 | 0.10 |
| | Geraniol | | 0.000 | 0.10 | 0.10 | 0.10 | 0.10 |
| | Limonene/β-caryophyllene | (Weight ratio) | 500.0 | 100.0 | 250.0 | 500.0 | 800.0 |
| | Citral/β-caryophyllene | | 10.0 | 10.0 | 10.0 | 10.0 | 10.0 |
| | Linalool/β-caryophyllene | | 0.00 | 1.00 | 1.00 | 1.00 | 1.00 |
| | Citronellal/β-caryophyllene | | 0.00 | 1.00 | 1.00 | 1.00 | 1.00 |
| | α-Terpineol/β-caryophyllene | | 0.00 | 1.50 | 1.50 | 1.50 | 1.50 |
| | Geranyl acetate/β-caryophyllene | | 0.00 | 10.00 | 10.00 | 10.00 | 10.00 |
| | Decanal/β-caryophyllene | | 0.00 | 0.50 | 0.50 | 0.50 | 0.50 |
| | Nerol/β-caryophyllene | | 0.00 | 1.00 | 1.00 | 1.00 | 1.00 |
| | Geraniol/β-caryophyllene | | 0.00 | 1.00 | 1.00 | 1.00 | 1.00 |
| Evaluation results | Lemony sour aroma | | 5.0 | 2.1 | 4.9 | 10.0 | 8.0 |
| | Aroma release | | 5.0 | 2.3 | 5.6 | 10.0 | 8.0 |
| | Overall balance | | 5.0 | 2.1 | 5.5 | 10.0 | 8.1 |
| | Brightness | | 5.0 | 2.4 | 5.5 | 10.0 | 8.3 |
| | Tingling or refreshing sensation | | 5.0 | 2.0 | 5.4 | 10.0 | 7.8 |
| | Structure and body | | 5.0 | 2.4 | 5.6 | 10.0 | 8.0 |
| | Brightness/structure and body | | 5.0 | 2.4 | 5.4 | 10.0 | 8.0 |
| | Potency and fullness | | 5.0 | 2.4 | 5.6 | 10.0 | 7.9 |
| | Green note | | 5.0 | 2.3 | 5.3 | 10.0 | 7.6 |
| | Structure and body from floral fragrance | | 5.0 | 2.3 | *5.3* | 10.0 | 8.1 |

**[Table 18]**

| | | | Comparative Example 21 | Example 48 | Example 43 | Example 49 |
|---|---|---|---|---|---|---|
| Composition | Limonene | (Wt%) | 50.0 | 50.0 | 50.0 | 50.0 |
| | Citral | | 1.0 | 1.0 | 1.0 | 1.0 |
| | β-Caryophyllene | | 0.01 | 0.02 | 0.1 | 0.2 |
| | Bergamottin | | 0.000 | 0.000 | 0.000 | 0.000 |
| | Linalool | | 0.10 | 0.10 | 0.10 | 0.10 |
| | Citronellal | | 0.10 | 0.10 | 0.10 | 0.10 |
| | α-Terpineol | | 0.15 | 0.15 | 0.15 | 0.15 |
| | Geranyl acetate | | 1.00 | 1.00 | 1.00 | 1.00 |
| | Decanal | | 0.05 | 0.05 | 0.05 | 0.05 |
| | Nerol | | 0.10 | 0.10 | 0.10 | 0.10 |
| | Geraniol | | 0.10 | 0.10 | 0.10 | 0.10 |
| | Limonene/β-caryophyllene | (Weight ratio) | 5000.0 | 2500.0 | 500.0 | 250.0 |
| | Citral/β-caryophyllene | | 100.0 | 50.0 | 10.0 | 5.0 |
| | Linalool/β-caryophyllene | | 10.00 | 5.00 | 1.00 | 0.50 |
| | Citronellal/β-caryophyllene | | 10.00 | 5.00 | 1.00 | 0.50 |
| | α-Terpineol/β-caryophyllene | | 15.00 | 7.50 | 1.50 | 0.75 |
| | Geranyl acetate/β-caryophyllene | | 100.00 | 50.00 | 10.00 | 5.00 |
| | Decanal/β-caryophyllene | | 5.00 | 2.50 | 0.50 | 0.25 |
| | Nerol/β-caryophyllene | | 10.00 | 5.00 | 1.00 | 0.50 |
| | Geraniol/β-caryophyllene | | 10.00 | 5.00 | 1.00 | 0.50 |
| Evaluation results | Lemony sour aroma | | 4.9 | 7.8 | 10.0 | 8.1 |
| | Aroma release | | 4.6 | 7.8 | 10.0 | 8.1 |
| | Overall balance | | 4.6 | 7.6 | 10.0 | 8.4 |
| | Brightness | | 4.0 | 7.8 | 10.0 | 8.4 |
| | Tingling or refreshing sensation | | 4.4 | 7.5 | 10.0 | 8.4 |
| | Structure and body | | 4.1 | 7.6 | 10.0 | 8.3 |
| | Brightness/structure and body | | 4.1 | 7.8 | 10.0 | 8.4 |
| | Potency and fullness | | 4.1 | 7.5 | 10.0 | 8.3 |
| | Green note | | 4.3 | 7.4 | 10.0 | 8.4 |
| | Structure and body from floral fragrance | | 4.1 | 7.8 | 10.0 | 8.4 |

**[Table 19]**

| | | | Example 50 | Example 43 | Example 51 | Example 52 | Comparative Example 22 |
|---|---|---|---|---|---|---|---|
| Composition | Limonene | (Wt%) | 50.0 | 50.0 | 50.0 | 50.0 | 50.0 |
| | Citral | | 0.5 | 1.0 | 5.0 | 11.0 | 25.0 |
| | β-Canyophyllene | | 0.1 | 0.1 | 0.1 | 0.1 | 0.1 |
| | Bergamottin | | 0.000 | 0.000 | 0.000 | 0.000 | 0.000 |
| | Linalool | | 0.10 | 0.10 | 0.10 | 0.10 | 0.10 |
| | Citronellal | | 0.10 | 0.10 | 0.10 | 0.10 | 0.10 |
| | α-Terpineol | | 0.15 | 0.15 | 0.15 | 0.15 | 0.15 |
| | Geranyl acetate | | 1.00 | 1.00 | 1.00 | 1.00 | 1.00 |
| | Decanal | | 0.05 | 0.05 | 0.05 | 0.05 | 0.05 |
| | Nerol | | 0.10 | 0.10 | 0.10 | 0.10 | 0.10 |
| | Geraniol | | 0.10 | 0.10 | 0.10 | 0.10 | 0.10 |
| | Limonene/β-caryophyllene | (Weight ratio) | 500.0 | 500.0 | 500.0 | 500.0 | 500.0 |
| | Citral/β-caryophyllene | | 5.0 | 10.0 | 50.0 | 110.0 | 250.0 |
| | Linalool/β-caryophyllene | | 1.00 | 1.00 | 1.00 | 1.00 | 1.00 |
| | Citronellal/β-caryophyllene | | 1.00 | 1.00 | 1.00 | 1.00 | 1.00 |
| | α-Terpineol/β-caryophyllene | | 1.50 | 1.50 | 1.50 | 1.50 | 1.50 |
| | Geranyl acetate/β-caryophyllene | | 10.00 | 10.00 | 10.00 | 10.00 | 10.00 |
| | Decanal/β-caryophyllene | | 0.50 | 0.50 | 0.50 | 0.50 | 0.50 |
| | Nerol/β-caryophyllene | | 1.00 | 1.00 | 1.00 | 1.00 | 1.00 |
| | Geraniol/β-caryophyllene | | 1.00 | 1.00 | 1.00 | 1.00 | 1.00 |
| Evaluation results | Lemony sour aroma | | 8.6 | 10.0 | 8.1 | 7.0 | 4.4 |
| | Aroma release | | 8.6 | 10.0 | 7.8 | 6.8 | 4.8 |
| | Overall balance | | 8.6 | 10.0 | 8.1 | 6.9 | 4.6 |
| | Brightness | | 8.3 | 10.0 | 7.9 | 6.5 | 4.1 |
| | Tingling or refreshing sensation | | 7.9 | 10.0 | 7.8 | 6.6 | 4.1 |
| | Structure and body | | 8.0 | 10.0 | 7.9 | 6.5 | 4.3 |
| | Brightness/structure and body | | 8.0 | 10.0 | 7.8 | 6.5 | 4.3 |
| | Potency and fullness | | 8.0 | 10.0 | 7.8 | 6.5 | 4.3 |
| | Green note | | 8.0 | 10.0 | 7.6 | 6.3 | 3.9 |
| | Structure and body from floral fragrance | | 8.0 | 10.0 | 7.6 | 6.4 | 4.1 |

### (Examples 53 to 57 and Comparative Example 23)

### <Regents used>

In Examples 53 to 57 and Comparative Example 23, citral, β-caryophyllene, linalool, citronellal, α-terpineol, geranyl acetate, decanal, nerol, and geraniol used were the same regents as in the above examples, e.g., Example 43. Limonene used was the same limonene-rich commercially available aroma agent as in the above examples, e.g., Example 11.

The above regents and the aroma agent were mixed with ethanol such that the limonene content, citral content, β-caryophyllene content, linalool content, citronellal content, α-terpineol content, geranyl acetate content, decanal content, nerol content, and geraniol content were the respective values (% by weight) shown in the following Table 20, whereby the composition of Example 53 was obtained.

The composition obtained in Example 53 was diluted with a diluent at dilution factors (weight-based dilution factors) shown in the following Table 20, whereby raw liquors were prepared. The diluent was prepared using neutral spirit 95 (ethanol content: 95% by volume) and water such that the ethanol content in each raw liquor was the value (vol%) shown in Table 20. In Example 57, bergamottin used was the same regent as in the examples, e.g., Example 9; this regent was added such that the bergamottin content was the value (wt%) shown in Table 20. Thereby, the raw liquors of Examples 54 to 57 and Comparative Example 23 were obtained.

The limonene-to-β-caryophyllene weight ratios (limonene/β-caryophyllene), the citral-to-β-caryophyllene weight ratios (citral/β-caryophyllene), the linalool-to-β-caryophyllene weight ratios (linalool/β-caryophyllene), the citronellal-to-β-caryophyllene weight ratios (citronellal/β-caryophyllene), the α-terpineol-to-β-caryophyllene weight ratios (α-terpineol/β-caryophyllene), the geranyl acetate-to-β-caryophyllene weight ratios (geranyl acetate/β-caryophyllene), the decanal-to-β-caryophyllene weight ratios (decanal/β-caryophyllene), the nerol-to-β-caryophyllene weight ratios (nerol/β-caryophyllene), and the geraniol-to-β-caryophyllene weight ratios (geraniol/β-caryophyllene) in the respective compositions or raw liquors were shown in Table 20.

### <Sensory evaluation>

The sensory evaluation was performed by four trained sensory panelists for three items: "lemony sour aroma", "aroma release", and "overall balance".

Sensory evaluation glasses were each charged with 20 mL of a 5 vol% aqueous ethanol solution. Onto this aqueous ethanol solution was added 25 µL of the composition obtained in Example 53. The aroma was then evaluated. In the evaluation of the aroma of the composition, each of the three aroma evaluation items, i.e., "lemony sour aroma", "aroma release", and "overall balance" was evaluated by the same evaluation criteria as those for the evaluation in Example 46, for example.

In the evaluation of the raw liquors, sensory evaluation glasses were each charged with 25 mL of one of the raw liquors obtained in Examples 54 to 57 and Comparative Example 23. The aroma was then evaluated. In the evaluation of the aroma of the raw liquors, each of the three aroma evaluation items, i.e., "lemony sour aroma", "aroma release", and "overall balance" was evaluated based on the following criteria using a rating scale with 0.1-point increments, where the reference points were set such that the raw liquor of Example 55 was evaluated as score 10, the composition of Example 2 was evaluated as score 5, and the 5 vol% aqueous ethanol solution was evaluated as score 1. For the "aroma release", a more rapid aroma release was evaluated as better aroma release. For the scores 6 to 10 in the evaluation criteria for "lemony sour aroma" and "aroma release" below, the term "enhanced" means that the score of the "lemony sour aroma" or the "aroma release" is higher than the evaluation (score 5) of the composition of Example 2. For the scores 6 to 10 in the evaluation criteria for "overall balance" below, the term "improved" means that the score of the "overall balance" is higher than the evaluation (score 5) of the composition of Example 2.

### Evaluation criteria for "lemony sour aroma"

10: The "lemony sour aroma" is highly significantly enhanced (equivalent to the raw liquor of Example 55).
9: The "lemony sour aroma" is significantly enhanced.
8: The "lemony sour aroma" is enhanced.
7: The "lemony sour aroma" is slightly enhanced.
6: The "lemony sour aroma" is very slightly enhanced.
5: The "lemony sour aroma" is perceived as very strong (equivalent to the composition of Example 2).
4: The "lemony sour aroma" is perceived as strong.
3: The "lemony sour aroma" is perceived.
2: The "lemony sour aroma" is perceived slightly.
1: The "lemony sour aroma" is not perceived (equivalent to the 5 vol% aqueous ethanol solution).

### Evaluation criteria for "aroma release"

10: The "aroma release" is highly significantly improved (equivalent to the raw liquor of Example 55).
9: The "aroma release" is significantly improved.
8: The "aroma release" is improved.
7: The "aroma release" is slightly improved.
6: The "aroma release" is very slightly improved.
5: The "aroma release" is very good (equivalent to the composition of Example 2).
4: The "aroma release" is good.
3: The "aroma release" is slightly good.
2: The "aroma release" is poor.
1: The "aroma release" is very poor (equivalent to the 5 vol% aqueous ethanol solution).

### Evaluation criteria for "overall balance"

10: The "overall balance" is highly significantly improved (equivalent to the raw liquor of Example 55).
9: The "overall balance" is significantly improved.
8: The "overall balance" is improved.
7: The "overall balance" is slightly improved.
6: The "overall balance" is very slightly improved.
5: The "overall balance" is very good (equivalent to the composition of Example 2).
4: The "overall balance" is good.
3: The "overall balance" is slightly good.
2: The "overall balance" is poor.
1: The "overall balance" is very poor (equivalent to the 5 vol% aqueous ethanol solution).

The sensory evaluation was performed by four trained sensory panelists for "bitterness" of the raw liquors obtained in Examples 55 and 57. Each sensory panelist took a portion (about 10 mL) of the raw liquor in the mouth and evaluated the "bitterness" based on the same criteria as those for the evaluation in Example 9.

For each evaluation item, a higher score indicates higher evaluation. The evaluation was based on the average of the scores of the four sensory panelists.

The evaluation results (averages of the scores of the four sensory panelists) of "lemony sour aroma", "aroma release", and "overall balance" are shown in Table 20. The evaluation results (averages of the scores of the four sensory panelists) of the "bitterness" of the raw liquors obtained in Examples 55 and 57 were 5.0 in Example 55 and 2.9 in Example 57.

Table 20 also includes the specifications of the composition obtained in Example 43.

**[Table 20]**

| | | | Example 43 | Example 53 | Comparative Example 23 | Example 54 | Example 55 | Example 56 | Example 57 |
|---|---|---|---|---|---|---|---|---|---|
| | | | Composition | | Raw liquor | | | | |
| Dilution factor | | | - | - | 7000 | 700 | 100 | 15 | 100 |
| Composition/ Raw liquor | Limonene | (Wt%) | 50.0 | 35.0 | 0.005 | 0.05 | 0.35 | 2.33 | 0.35 |
| | Citral | | 1.0 | 1.0 | 0.0001 | 0.0014 | 0.0100 | 0.0667 | 0.0100 |
| | β-Caryophyllene | | 0.1 | 0.1 | 0.00001 | 0.0001 | 0.0010 | 0.0067 | 0.0010 |
| | Bergamottin | | 0.000 | 0.000 | 0.000 | 0.000 | 0.000 | 0.000 | 0.00005 |
| | Linalool | | 0.10 | 0.10 | 0.00001 | 0.0001 | 0.0010 | 0.0067 | 0.0010 |
| | Citronellal | | 0.10 | 0.10 | 0.00001 | 0.0001 | 0.0010 | 0.0067 | 0.0010 |
| | α-Terpineol | | 0.15 | 0.15 | 0.00002 | 0.0002 | 0.0015 | 0.0100 | 0.0015 |
| | Geranyl acetate | | 1.00 | 1.00 | 0.00014 | 0.0014 | 0.0100 | 0.0667 | 0.0100 |
| | Decanal | | 0.05 | 0.05 | 0.00001 | 0.0001 | 0.0005 | 0.0033 | 0.0005 |
| | Nerol | | 0.10 | 0.10 | 0.00001 | 0.0001 | 0.0010 | 0.0067 | 0.0010 |
| | Geraniol | | 0.10 | 0.10 | 0.00001 | 0.0001 | 0.0010 | 0.0067 | 0.0010 |
| | Limonene/β-caryophyllene | (Weight ratio) | 500.0 | 350.0 | 350.0 | 350.0 | 350.0 | 350.0 | 350.0 |
| | Citral/β-caryophyllene | | 10.0 | 10.0 | 10.0 | 10.0 | 10.0 | 10.0 | 10.0 |
| | Linalool/β-caryophyllene | | 1.00 | 1.00 | 1.00 | 1.00 | 1.00 | 1.00 | 1.00 |
| | Citronellal/ β-caryophyllene | | 1.00 | 1.00 | 1.00 | 1.00 | 1.00 | 1.00 | 1.00 |
| | α-Terpineol/ β-caryophyllene | | 1.50 | 1.50 | 1.50 | 1.50 | 1.50 | 1.50 | 1.50 |
| | Geranyl acetate/ β-carophyllene | | 10.00 | 10.00 | 10.00 | 10.00 | 10.00 | 10.00 | 10.00 |
| | Decanal/β-caryophyllene | | 0.50 | 0.50 | 0.50 | 0.50 | 0.50 | 0.50 | 0.50 |
| | Nerol/β-caryophyllene | | 1.00 | 1.00 | 1.00 | 1.00 | 1.00 | 1.00 | 1.00 |
| | Geraniol/β-caryophyllene | | 1.00 | 1.00 | 1.00 | 1.00 | 1.00 | 1.00 | 1.00 |
| | Ethanol | (Vol%) | - | - | 15.00 | 15.00 | 15.00 | 15.00 | 15.00 |
| Evaluation results | Lemony sour aroma | | 10.0 | 9.4 | 3.0 | 7.3 | 10.0 | 6.6 | 9.0 |
| | Aroma release | | 10.0 | 10.0 | 3.3 | 7.3 | 10.0 | 7.1 | 8.6 |
| | Overall balance | | 10.0 | 9.4 | 3.4 | 7.5 | 10.0 | 7.0 | 9.0 |

### <Production Example 1>

A 1000-L portion of raw material alcohol was mixed with 350 kg of fresh lemon peel and 800 L of water. The mixture was subjected to immersion overnight at room temperature and the immersion liquid was distilled at atmospheric pressure. The resulting distillate was used as a raw liquor. This raw liquor was mixed with 1.0% by weight of the aroma agent in Example 2.

## Claims

1. A composition comprising limonene, citral, and β-caryophyllene, wherein the composition has
a limonene-to-β-caryophyllene weight ratio (limonene/β-caryophyllene) of 250 to 2500,
a citral-to-β-caryophyllene weight ratio (citral/β-caryophyllene) of 5 to 110,
a limonene content of 2.5 to 90% by weight, and
a bergamottin content of 0.01% by weight or less.

2. The composition according to claim 1, wherein the composition has a β-caryophyllene content of 0.01 to 0.2% by weight.

3. The composition according to claim 1 or 2, further comprising at least one selected from the group consisting of linalool, citronellal, α-terpineol, geranyl acetate, decanal, nerol, and geraniol.

4. The composition according to claim 1 or 2, wherein the composition is obtainable by use of lemon as one of raw materials or as a single raw material.

5. The composition according to claim 1 or 2, wherein the composition is an aroma agent.

6. The composition according to claim 1 or 2, wherein the composition is to be added to a beverage for use.

7. A packaged beverage comprising the composition according to claim 1 or 2 and a beverage.

8. A raw liquor comprising limonene, citral, β-caryophyllene, and ethanol, wherein the raw liquor has
a limonene-to-β-caryophyllene weight ratio (limonene/β-caryophyllene) of 250 to 2500,
a citral-to-β-caryophyllene weight ratio (citral/β-caryophyllene) of 5 to 110,
a limonene content of 0.05 to 2.5% by weight, and
an ethanol content of 10% by volume or more.

9. The raw liquor according to claim 8, wherein the raw liquor has a bergamottin content of 0.00005% by weight or less.

10. The raw liquor according to claim 8 or 9, wherein the raw liquor has a β-caryophyllene content of 0.0001 to 0.01% by weight.

11. The raw liquor according to claim 8 or 9, further comprising at least one selected from the group consisting of linalool, citronellal, α-terpineol, geranyl acetate, decanal, nerol, and geraniol.

12. A method for producing an alcoholic beverage, the method comprising adding the raw liquor according to claim 8 or 9.

13. A beverage comprising limonene, citral, and β-caryophyllene, wherein the beverage has
a limonene-to-β-caryophyllene weight ratio (limonene/β-caryophyllene) of 250 to 2500,
a citral-to-β-caryophyllene weight ratio (citral/β-caryophyllene) of 5 to 110,
and
a limonene content of 0.01 to 2.5% by weight.

14. The beverage according to claim 13, further comprising at least one selected from the group consisting of linalool, citronellal, α-terpineol, geranyl acetate, decanal, nerol, and geraniol.

15. The beverage according to claim 13 or 14, wherein the beverage is an alcoholic beverage.

16. The beverage according to claim 13 or 14, wherein the beverage is a non-alcoholic beverage.

17. The beverage according to claim 13 or 14, wherein the beverage is a packaged beverage.
